# EUROPÄISCHE PATENTSCHRIFT

(11) **EP 0 910 248 B1**
(45) Veröffentlichungstag und Bekanntmachung des Hinweises auf die Patenterteilung: **31.10.2001**
(21) Anmeldenummer: 98912488.8
(22) Anmeldetag: 18.03.1998
(51) Int. Cl.: A21C 3/06, A21C 9/08, A21C 11/10

(54) **VERFAHREN UND VORRICHTUNG SOWIE STANZWERKZEUG ZUR HERSTELLUNG VON EINZELNEN TEIGSTÜCKEN AUS EINER KONTINUIERLICHEN TEIGBAHN**
METHOD, DEVICE AND CUTTING TOOL FOR PRODUCING INDIVIDUAL PIECES OF DOUGH FROM A CONTINUOUS LINE OF DOUGH
PROCEDE, DISPOSITIF ET OUTIL DE DECOUPAGE POUR LA PRODUCTION DE MORCEAUX DE PATE INDIVIDUELS A PARTIR D'UNE BANDE DE PATE CONTINUE

(30) Priorität: 18.04.1997 DE 19716159; 16.05.1997 DE 19720689
(43) Veröffentlichungstag der Anmeldung: 28.04.1999
(73) Patentinhaber: A. FRITSCH GMBH & CO. KG, D-97348 Markt Einersheim (DE)
(72) Erfinder: NOWOTNY, Klaus, D-97348 Markt Einersheim (DE); BERNHARDT, Udo, D-97346 Iphofen (DE)
(74) Vertreter: Götz, Georg, Dipl.-Ing.
(86) Internationale Anmeldenummer: EP9801592
(87) Internationale Veröffentlichungsnummer: WO9847378

(56) Entgegenhaltungen:
- EP-A- 0 382 105
- EP-A- 0 482 917
- US-A- 5 365 816

## Beschreibung

Die Erfindung betrifft ein Verfahren zur Herstellung von einzelnen Teigstücken aus einer kontinuierlichen Teigbahn, indem in den Endabschnitt der Teigbahn eine schräg oder quer zur Bahnlängsrichtung verlaufende Reihe von separaten, jeweils in sich geschlossenen Konturen ausgeschnitten wird, welche den Teigstücken entsprechen, diese in Reihe nebeneinanderliegenden Konturen bzw. Teigstücke vom Bahnende entfernt und zur Weiterverarbeitung gedreht oder verschwenkt oder sonstwie positioniert abgelegt werden, gemäß Oberbegriff des Anspruchs 1. Ferner die betrifft die Erfindung eine Vorrichtung zur Vereinzelung von Teigstücken aus einer kontinuierlichen Teigbahn, die zur Durchführung des genannten Verfahrens geeignet und mit folgenden Komponenten versehen ist: mit einem die Teigstückkonturen aufweisenden und von Antriebsmitteln betätigten und/oder bewegten Stanz- oder sonstigem Schneidwerkzeug, mit einem diesem gegenüberliegenden Tisch als Auf-, Unter- oder Ablage für das Teigband und die daraus mittels des Stanz- oder Schneidwerkzeugs geschnittenen Teigstücke und mit auf die Antriebsmittel einwirkenden Steuermitteln für die Koordination der zu bewegenden oder anzutreibenden Vorrichtungskomponenten einschließlich des Stanz- oder Schneidwerkzeugs.

Derartige Verfahren und Vorrichtungen dienen dem Zuschneiden von Teig für bestimmte Backwaren, die aus Teigstücken gewickelt werden, insbesondere Croissants. Für diese werden gleichschenklige Dreiecke immer so aus dem Teigband ausgeschnitten, daß keine Teigreste entstehen (vgl. zum Beispiel EP 0 382 105 A1). Dies bedingt, daß die Basisseite des gleichschenkligen Dreiecks immer parallel zur Transportrichtung des Teigbandes liegen muß. Allerdings muß zum Wickeln des Teigstücks die Dreieck-Basisseite immer nach vome in Transportrichtung weisend liegen. Deshalb werden Maschinen benötigt, welche das dreieckige Teigstück auf dem Förderband in die genannte, gewünschte Position bringen.

In dieser Hinsicht sind sogenannte Wickel-Croissautomaten" bekannt, das sind Maschinen, die aus dem Teigband Dreiecke ausschneiden und mittels hintereinander angeordneter Förderbänder über Differenzgeschwindigkeiten die geschnittenen Dreiecke auseinander ziehen. Diese werden dann verbandweise auf weitere Förderbänder übergeben, die im rechten Winkel zu den vorausgehenden Förderbändern angeordnet sind. Zwar werden auf diese Weise teuere Spreiz- und Dreheinrichtungen für die Teigstücke erspart. Nachteilig jedoch ist, daß die Transportrichtung um 90° abgelenkt werden muß (beispielsweise wenn direkt auf einen Froster zugearbeitet werden soll). Ferner ist von Nachteil, daß wegen der Lage des Basisschenkels des ausgeschnittenen Dreiecks links und rechts der Maschine je eine Winkeleinrichtung benötigt wird. Bei Verwendung nur eines Wicklers ist der ausgeschnittene Teigling zu wenden, wobei jeweils ein Teigstück-Verband mit einer trockenen Oberseite und einem Teigstück-Verband mit einer feuchten Oberseite in den Wickler einläuft.

Auch in Croissant-Herstellungsmaschinen der eingangs genannten Art, sogenannte "Linien-Croissantomaten", werden Teigstücke in einer speziellen Schneidestation ausgeschnitten und auf einem Förderband der Weiterverarbeitung zugeleitet (vgl. EP 0 382 105 A1). Die ausgeschnittenen Teigstücke werden dabei voneinander "gespreizt", das heißt quer zur Förderrichtung auseinanderbewegt, damit Platz zu ihrem Drehen entsteht. Das Auseinanderrücken und Drehen der Teigstücke erfolgt mittels Greifer in einer Ebene parallel zur Förderband-Oberseite. Der Transport der Teigstücke erfolgt dabei stets geradeaus bzw. in Linie. Die Greifer- und Pick-up-Einrichtungen zum Spreizen und Drehen erfordern eine große Anzahl von Antriebsmotoren, was den Aufwand an Baukomponenten und an die Steuerungssoftware erhöht. Hinzu kommen noch die Schneidstationen, für die besondere Stanzeinrichtungen oder auch Schneidwalzen nebst zugehörigen Antrieben erforderlich sind.

Beiden bekannten Systemen ist der Nachteil gemeinsam, daß das Teigstück nach dem Stanzen/Schneiden noch relativ lang am Teigband verbleibt, bevor es durch Förder-/Spreizmittel vom Teigband wegbewegt wird. Dadurch können vor allem bei bestimmten Teigen die Schnittflächen wieder verkleben.

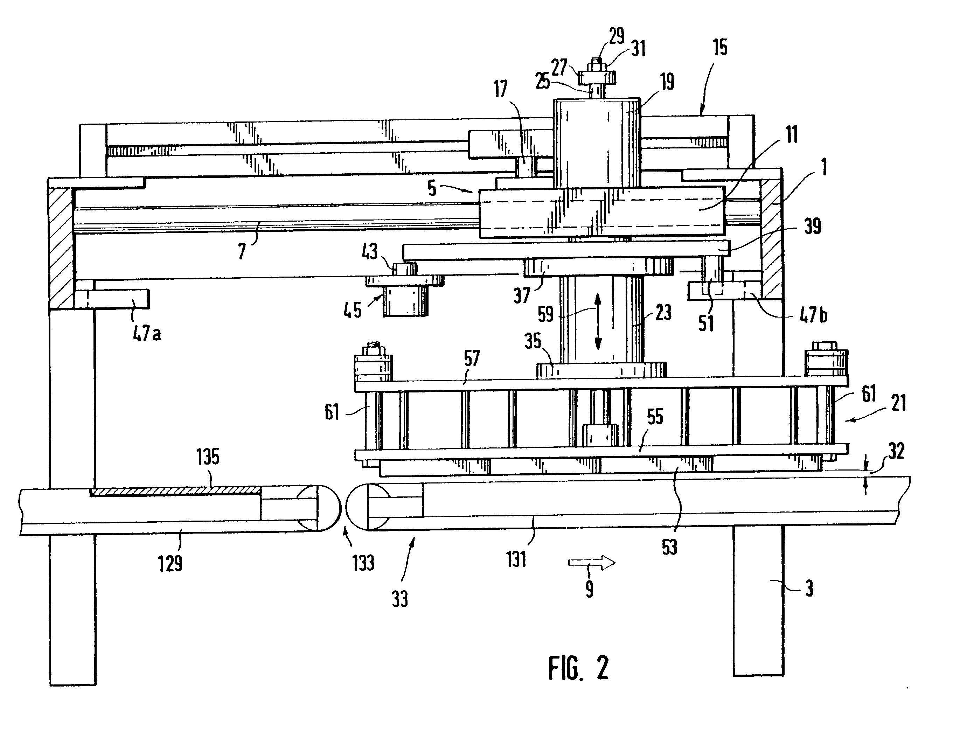

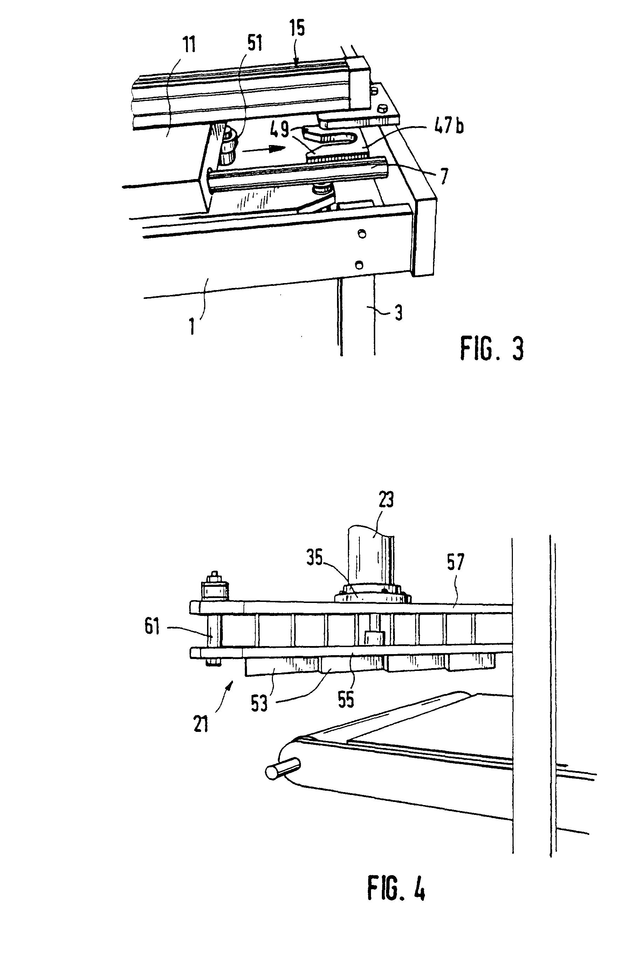

EP-A-0 482 917 offenbart ein Verfahren und eine Vorrichtung zum Vereinzeln und Ausrichten von Croissant-Teigstücken. Dazu wird die Verwendung von Greifklauen 51 mit vorspringenden, in den Teig eindringenden Stiften (vgl. Figur 2) vorgeschlagen. Diese Stift-Greifer werden sowohl bei der Vereinzelungsvorrichtung 5 als auch der Ausrichtvorrichtung 6 (vgl. Figur 2) eingesetzt. Das Eindringen der Stifte 62 in das Teigstück zu dessen Ausrichtung ist deutlich in Figur 4 gezeigt. Vor allem ist hieraus erkennbar, daß die Stiftgreifer 51 bzw. 62 ohne Schneidwirkung arbeiten. Die Stiftgreifer 51 bzw. 62 sind einzig dafür vorgesehen, bereits fertig geschnittene Teigstücke im weiteren Verlauf ohne Schneiden auseinander zu bewegen und auszurichten. Also wird das Vereinzeln und Ausrichten der bereits geschnittenen Teigstücke mit besonders ausgebildeten Greifern mit vorspringenden, in die Teigstücke eindringenden Stiften bewerkstelligt.

Dem vorstehend diskutierten Stand der Technik ist der Nachteil gemeinsam, daß das Schneiden der Teigstücke einerseits und das Vereinzeln, Auseinanderbewegen und Ausrichten der Teigstücke andererseits mit jeweils separat zugeordneten Einrichtungen (Schneidwalze aus EP-A-0 382 105, Vereinzelungseinrichtung 5 und Ausrichteinrichtung 6 aus EP-A-0 482 917) bewerkstelligt werden muß. Dies führt nicht nur zu einer aufwendigen, umfangreichen Gerätetechnik mit in großer Zahl anzutreibenden und zu koordinierenden Komponenten, vielmehr ergibt sich auch eine Zeitverzögerung zwischen dem Vorgang des Schneidens und dem Vorgang des Greifens zum Vereinzeln und Ausrichten der Teigstücke. Während dieser Zeitverzögerung kann es leicht dazu kommen, daß die frisch geschnitten und noch feucht aneinanderliegenden Kanten benachbarter Teigstücke sich wieder verbinden, miteinander verkleben usw., was den nachfolgenden Vereinzelungsvorgang erschwert und zudem das ästhetische Aussehen der Teigstücke mindert.

Der Erfindung liegt die Aufgabe zugrunde, unter Vermeidung der oben genannten Nachteile für den Teigtransport in Linie ein Verfahren und eine Vorrichtung zum Ausschneiden von Teigstücken aus kontinuierlichen Teigbändern sowie zum ausgerichteten Ablegen der ausgeschnittenen Teigstücke für die Weiterverarbeitung zu schaffen, bei der eine geringe Anzahl an Funktions- bzw. Baukomponenten und ein geringer Herstellungs- und Konstruktionsaufwand, insbesondere was die Teigstückführung angeht, notwendig ist Auch soll ein Verkleben der Teigstücke miteinander unmittelbar nach ihrem Zerschneiden verhindert sein.

Zur Lösung wird das im Anspruch 1 angebene Verfahren erfindungsgemäß vorgeschlagen. Nach der Erfindung wird also das eine oder werden die mehreren Stanzmittel, sei es ein Verbund von Schneidkonturen im Rahmen eines Stanzwerkzeugs, nicht nur zum Ausschneiden der Teigstücke, sondern auch zum Transport, zum Verschieben und zur Bewegung der ausgeschnittenen Teiglinge verwendet. Teuere Spreiz- und Dreheinrichtungen mit automatischen Greifersystemen lassen sich dabei einsparen. Wenn erfindungsgemäß ein oder mehrere Stanzwerkzeuge jeweils mit einem vorzugsweise länglichen Oberteil verwendet werden, das einen oder mehrere die Konturen erzeugende Schneidabschnitte zur Erzeugung der Teigstückreihe aufweist, läßt sich dieser Verband von Teigstücken zwischen den Schneidelementen des Stanzwerkzeug-Oberteils halten, führen und verschieben. Eine längliche Form für das Oberteil ist deshalb zweckmäßig, weil sich dann mehrere Schneidabschnitte jeweils mit einer Teigstück-Kontur aneinanderreihen lassen, auch in Transportrichtung hintereinander. Dazu ist es vorteilhaft, daß unmittelbar nach dem Schneiden bzw. Stanzen der Teigstückkonturen in das Teigbandende der Druck auf das Stanzwerkzeug-Oberteil gegen das zugehörige Unterteil soweit zurückgenommen wird, daß das Oberteil mit seinen Schneidkanten auf der Oberfläche des Unterteils gleiten und/oder darüber bewegt werden kann. Dadurch läßt sich der ausgeschnittene Teigstück-Verband oder auch ein einziges Teigstück mit einem einzelnen Schneidmittel besonders leicht vom Teigbandende über eine Oberfläche oder -seite entfernen, drehen oder sonstwie positionieren.

Gemäß einer Erfindungsausbildung wird die Teigstückkontur im Folgeschnittverfahren hergestellt: Eine vor den beweglichen Stanzwerkzeugen installierte, stationäre Stanzeinrichtungschneidet beispielsweise die Basis einer gleichschenklig dreieckförmigen Teigstückkontur, während die Schenkel mit dem zur Teigstückbewegung eingesetzten Schneidmitteln geschnitten werden. Bei Folgeschnittwerkzeugen ist es sinnvoll, das Teigstück zusätzlich mit Pickem zu fassen, da die Kontur des Stanzwerkzeugs nicht geschlossen ist.

Im Rahmen einer Erfindungsausbildung muß das Stanzwerkzeug zur Fortbewegung der Teigstücke nicht gedreht werden. Zum Beispiel bei rechteckigen, quadratischen oder runden Produkten, wo Drehen keinen Sinn machen würde, genügte eine nur lineare Fortbewegung.

Der Durchsatz an ausgeschnittenen und ausgerichteten Teigstücken läßt sich erhöhen, wenn nach einer Ausbildung des erfindungsgemäßen Verfahrens mehrere, möglichst viele Stanzmittel jeweils mit einer Schneidkontur für die Teigstückform in Transportrichtung nebeneinander und/oder hintereinander im Teigband-Endbereich angeordnet und im Verbund miteinander oder auch vereinzelt zueinander synchronisiert und/oder koordiniert betätigt sowie bewegt werden. Dieser Gedanke läßt sich durch die oben angesprochene, längliche Form für das Stanzwerkzeug-Oberteil, worin mehrere Schneidmittel einstückig aneinandergereiht sein können, in der Praxis zweckmäßig umsetzen.

Die oben genannte Erfindungsaufgabe läßt sich bei dem eingangs genannten Verfahren nach einer zusätzlichen Ausbildung der bisher erläuterten Verfahrenserfindung dahingehend lösen, daß die Teigstücke nach ihrem Ausschneiden in ihrer Anordnung und/oder in ihrem Verband bzw. ihrer Reihe belassen werden, und mittels des oder der Schneidmittel diese Teigstück-Reihe oder -Anordnung als Ganzes vom Bahnende entfernt und gedreht und dann abgelegt wird, wonach die Schneidmittel in ihre Ausschneideposition zum (stirnseitigen) Bahnende zuruckbewegt und wieder gedreht werden. Damit ist auch dem eingangs genannten, bei gattungsgemäßen Verfahren angestrebten Ziel, einen Teigstück-Transport in Linie zu schaffen, Rechnung getragen, insbesondere bei der Croissantherstellung, für die gleichschenklige Teigdreiecke ausgeschnitten werden, läßt sich dabei die Dreieck-Basisseite als in Transportrichtung weisende Stimseite positionieren. Dabei ist die der Basisseite gegenüberliegende Dreiecksspitze nach rückwärts entgegen der Teigtransportrichtung gewandt.

Nach einer Konkretisierung der allgemeinen, erfinderischen Grundidee werden in dem Zeitraum zwischen dem Ausschneiden der Teigstücke und deren Ablegen die die ausgeschnittenen Teigstücke mit sich führenden Schneidmittel zunächst vom Bahnende linear entfernt und dann gedreht; nach dem Teigstück-Ablegen wird dieser Ablauf umgekehrt wiederholt, bis die Schneidmittel wieder über das Teigbahnende angelangt sind. Bei dieser Bewegungsfolge wandert der Drehpunkt oder die Drehachse des Schneidmittel-Verbundes in Transportrichtung vom Teigbandende weg und wieder zurück.

Im Rahmen der Erfindung können die Teigstücke an sich beliebige Formen aufweisen. In der Praxis jedoch finden meist im Zusammenhang mit der Croissant-herstellung die Konturen eines gleichschenkligen Dreiecks oder eines Trapezes Anwendung, welche gegenüber einer Mittelachse symmetrisch sind. Wegen der Forderung nach Restteigfreiheit werden, wie an sich bekannt (vgl. EP 0 382 105 A1), die Teigstücke in der Form eines gleichschenkligen Dreieckes oder eines symmetrischen Trapezes am Teigbahnende so ausgeschnitten, daß der Teigbahn-Endrand etwa sägezahnartig verläuft. In diesem Zusammenhang ist eine Ausbildung des erfindungsgemäßen Verfahrens zweckmäßig, wonach zwischen jedem Teigschneidevorgang das oder die Schneidmittel gegebenenfalls im Verbund miteinander um 180° in alternierender Richtung gedreht werden. Dadurch ist es möglich, daß die Schneidkonturen des Schneidwerkzeugs sich mit dem jeweils entstandenen, sägezahnförmigen Teigbahn-Endrand decken, der nach jedem Schneidvorgang entsprechend einer 180°-Phasenverschiebung bzw. einer Achsenspiegelung neu entsteht.

Zur Lösung der obigen Erfindungsaufgabe wird bei einer Vorrichtung mit den eingangs genannten Merkmal erfindungsgemäß vorgeschlagen, das Stanz- werkzeug erfassende Führungsmittel vorzusehen, die derart mit den Antriebs- und/oder Steuermitteln gekoppelt sind und parallel zur Tischoberseite verlaufen, daß das Stanzwerkzeug mit den ausgeschnittenen Teigstücken direkt auf und/oder entlang der Tischoberseite gleiten kann und vom Teigbahnende entfembar und dreh- oder verschwenkbar ist. Diese Bewegungen verlaufen in einer Ebene parallel zur Tischoberseite und quer oder schräg zur Schneidrichtung. Die oben zum erfindungsgemäßen Verfahren genannten Vorteile gelten hier entsprechend. Insbesondere werden die ohnehin notwendigen Stanz- werkzeuge nicht nur zum eigentlichen Zweck des Ausschneidens von Teigstücken, sondem auch zu deren Transport und Ausrichtung zusätzlich ausgenutzt. Dies erspart die Anordnung separater, zusätzlicher Funktionskomponenten wie Greifer. Zudem lassen sich die frisch geschnittenen Teigstücke rechtzeitig vom Teigbahnende wegbewegen, bevor sie miteinander verkleben.

Zur Erhöhung der Transport- und Gleitfähigkeit sowie zur Verminderung von Verschleiß und mechanischen Beschädigungen ist nach einer Ausbildung der erfindungsgemäßen Vorrichtung vorgesehen, daß die Antriebsmittel eine zum Teigband gerichtete Druck- oder Betätigungseinrichtung und eine dieser entgegengerichtete oder entgegenwirkende Rückstelleinrichtung aufweisen, mit denen jeweils die Schneidelemente des Stanzwerkzeugs verbunden sind. Dabei ist der von der Rückstelleinrichtung für die Schneidelemente ausgelöste Rückweg so bemessen, daß die Schneidelemente außer formschlüssigen Eingriff mit der Tischoberseite geraten, das Stanzwerkzeug jedoch mit den ausgeschnittenen Teigstücken in reibschlüssigen Eingriff und/oder Gleitkontakt mit der Tischoberseite bleibt. Dadurch ist gewährleistet, daß die Teigstücke immer zwischen dem Stanzwerkzeug und der Tischoberseite (welche beim Stanzen das Stanz-Unterteil bildet) gehalten, geführt und verschoben werden können.

Eine der erfindungsgemäßen Verfahrensweise entsprechende oder angepaßte Struktur der Führungsmittel für das Stanzzeug besteht darin, daß diese eine vom Teigbahnende in oder parallel zur Transportrichtung zum Ablageplatz der Teigstücke verlaufende Linearführung aufweisen, in der ein das Stanzwerkzeug tragender Schlitten hin- und herverschiebbar gelagert ist. Im oder am Schlitten ist eine Drehlagerung ausgebildet, an der das Stanzwerkzeug drehbar angebracht ist. Entsprechend sind die Antriebsmittel mit einem Linearantriebsmodul zur Bewegung des Schlittens und einem Drehantriebsmodul zur Drehung des Stanzzeugs zwecks Ausrichtung der abzulegenden Teigstücke versehen, wobei diese Module zu ihrer Koordination und/oder Synchronisation untereinander und/oder mit etwaigen Teigstück- oder Teigbahn-Fördermittein mit den Steuermitteln gekoppelt sind.

Zur Einsparung von Antriebskomponenten ist mit Vorteil das Drehantriebsmodul passiv ausgebildet, dergestalt, daß es vom Linearantrieb bzw. dem davon getriebenen Schlitten über Mitnehmerelemente um die Drehachse der Drehlagerung in Drehung versetzt wird. Andererseits ist es denkbar, auch für den Drehantrieb - wie für den Unearantrieb - gesonderte Antriebseinheiten, beispielsweise einen elektrischen Rotationsmotor vorzusehen. Solchenfalls wäre als Linearantrieb ein elektrischer Linearmotor zweckmäßig, weil dann beide Elektromotoren über ein gemeinsames Kommunikationssystem von den Steuermitteln geleitet und/oder geregelt werden könnten.

Der Lösung der obigen Erfindungsaufgabe dient auch ein mit der angesprochenen, erfindungsgemäßen Vorrichtung kombinierbares Stanzwerkzeug, das sich durch eine erste und eine zweite Halteplatte als Grundstruktur auszeichnet, die gegeneinander in Stanzhubrichtung (rück-)verstellbar verbunden sind. Die erste Halteplatte trägt die Schneidelemente mit den die Teigstückkontur bildenden bzw. erzeugenden Schneidkanten, und die zweite Halteplatte ist mit Elementen zum Ausstoßen und/oder Niederhalten von Teig an oder zwischen den Schneidelementen versehen. Dazu sind die Teig-Ausstoß- und/oder Halteelemente unmittelbar neben den Schneidelementen und/oder an diesen gleitbar mit einem Verstellhub angeordnet, der sich beidseits der Schneidkante des Schneidelements erstreckt. Mit diesem Stanzwerkzeug in zweiteiliger, in sich verstellbarer Grundstruktur lassen sich die Ausstoß- und/oder Halteelemente für eine zuverlässige Ablage der Teigstücke und für eine teigfreie Rückführung der Schneidelemente zum stirnseitigen Teigbahnende einsetzen.

Weitere Einzelheiten, Merkmale und Vorteile auf der Basis der Erfindung ergeben sich aus den Unteransprüchen sowie der nachfolgenden Beschreibung eines bevorzugten Ausführungsbeispiels der Erfindung anhand der Zeichnungen. Diese zeigen in:
- Fig. 1: eine perspektivische Seitenansicht auf die erfindungsgemäße Maschine zum Ausstanzen, Drehen und Positionieren von ausgeschnittenen Teig-Dreiecken mit Maschinengestell, Linearführungssystem im oberen Bereich, darin geführten Schlitten u.a.
- Fig. 2: die erfindungsgemäße Maschine in Seitenansicht,
- Fig. 3: eine perspektivische Seitenansicht auf den stirnseitigen Endbereich der Maschine mit Zentriergabel,
- Fig. 4: eine perspektivische Seitenansicht auf den unteren Maschinenteil mit Stanzwerkzeug,
- Fig. 5: die erfindungsgemäße Anordnung des Stanzwerkzeugs, Werkzeugträgers und Schlittens in der Maschine,
- Fig. 6: eine Schnittansicht nach der Linie VI - VI in Fig. 5,
- Fig. 7: die Einzelheit Vll aus Fig. 5 in vergrößerter Darstellung
- Fig. 8: eine Ansicht auf die Schneidplatte des Stanzwerkzeugs auf der Unterseite ohne Schneidmesser,
- Fig. 9: in Draufsicht die Teigstück-/Stanzwerkzeug-Bewegungsabfolge vom Ausschneiden bis zum ausgerichteten Ablegen nach der Erfindung,
- Fig. 10: in entsprechender Ansicht die Teigstück-/Stanzwerkzeug-Bewegungsfolge von der Ablage bis zum Ausschneidvorgang,
- Fig. 11: die Fig. 9 entsprechenden Bewegungsstationen des Stanzwerkzeugs in der Maschine nach Ausschneiden in Teigtransportrichtung in Draufsicht,
- Fig. 12: die Fig. 10 entsprechenden Bewegungsstationen des Stanzwerkzeugs in der Maschine nach Teigstück-Ablage entgegen der Teigtransportrichtung, und
- Fig. 13a-d: jeweils in perspektivischer Darstellung die Wirkungsweise der erfindungsgemäßen Maschine mit den Stanzwerkzeug-Bewegungsstationen eines vollständigen Arbeitszyklus.

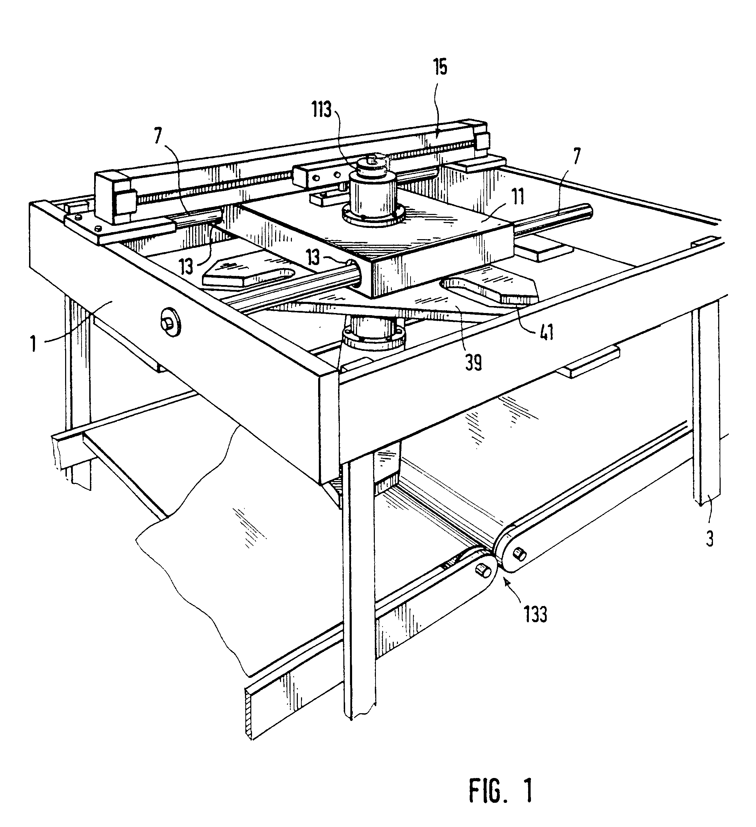

Gemäß Fig. 1 und 2 ist der Rahmen 1 der erfindungsgemäßen Maschine zum kombinierten Stanzen und Positionieren von Teigstücken über ein Gestell 3 auf dem Boden oder in einem Maschinenfundament abgestützt. Im oberen Bereich des Maschinenrahmens 1 ist eine Linearführung 5 mit einer Führungsstange 7 eingebaut, die sich parallel zur Teigtransportrichtung bzw. zur Maschinenseite erstreckt. Auf der Führungsstange 7 ist ein Schlitten 11 in oder entgegen der Teigtransportrichtung 9 verschiebbar gelagert; im praktischen Ausführungsbeispiel durchsetzen zwei Führungsstangen 7 den Schlitten 11 über darin ausgebildete, durchgehende Führungsbohrungen 13. Zur Schlittenführung kann eine an sich bekannte Kugelbuchsenführung Einsatz finden.

Als lineares Antriebsmittel für den Zylinder ist ein im praktischen Ausführungsbeispiel kolbenstangenloser Pneumatikzylinder 15 oberhalb des Schlittens 11 angeordnet und gegen den Maschenrahmen 1 abgestützt. Dessen Bewegungshub erstreckt parallel zur Führungsstange 7 der Schlitten-Linearführung 5. Durch eine (nicht gezeichnete), übergeordnete Steuerung wird der Pneumatikzylinder 15 zeitgerecht angesteuert bzw. betätigt, um über Mitnehmerzapfen 17, die sowohl am Pneumatikzylinder 15 als auch am Schlitten 11 zu deren Führungen quer verlaufend befestigt sind, den Schlitten 11 in und entgegen der Teigtransportrichtung 9 zu bewegen.

Alternativ kann das Linearführungssystem auch durch einen reversierbaren Drehstromantrieb gebildet werden, der den Schlitten durch einen Zahnriemen antreibt. Dabei kann der Schlittenführung beispielsweise als Profilschienenführung ausgeführt sein.

Gemäß Fig. 1 und 2 sind im Schlitten 11 auf der Oberseite ein weiterer Pneumatikzylinder 19 zur Einprägung des Stanzhubs für ein Stanzwerkzeug 21 und auf der Unterseite ein Werkzeugträger 23 zum Tragen und Halten des Stanzwerkzeugs 21 angebracht. Am oberen, stirnseitigen Ende des Stanzhub-Pneumatikzylinders 19 ist auf einer durchgehenden Mittelstange 25 am oberen Ende eine Dämpfungsscheibe 27 aufgesetzt (nach Fig. 1 eine Gummi-Dämpfungsfeder 113). Diese läßt sich in Verbindung mit einer von oben auf ein stirnseitiges vorstehendes Außengewinde 29 der Mittelstange 25 aufgeschraubten Einstellmutter 31 als Gegenlager zum Einstellen des Abstandes 32 der Schneidelemente des Stanzwerkzeugs 21 zum Stanzunterteil 33 verwenden. Das Stanzwerkzeug 21 kann am unteren Ende des Werkzeugträgers 23 über eine (schematisch dargestellte) Schnellwechseleinrichtung 35 befestigt sein. Damit läßt sich flexibel auf Teigstück-Formwünsche des Anwenders durch Wechseln des Stanzwerkzeugs unter Einsatz der entsprechenden Form reagieren. Am oberen Ende des zylindrischen Werkzeugträgers ist über eine radiale Erweiterung 37 eine Drehscheibe 39 befestigt. Über diese lassen sich, wie weiter unten ausführlich dargestellt, aus dem Linearantrieb 15 in Verbindung mit der Linearführung 5 Drehbewegungsabläufe für das Stanzwerkzeug ableiten, die je nach gewünschter Teigform durch in die Drehscheibe 39 eingeprägte bzw. ausgeschnittene, spezifisch angepaßte Führungsbahnen realisiert sind. Im konkreten Ausführungsbeispiel ist dies durch zwei zum Drehpunkt der Drehscheibe 39 symmetrisch angeordnete Führungsaussparungen 41 realisiert, in die zum gegebenen Zeitpunkt (siehe unten) die Kolbenstangen 43 von zwei im Maschinenraum 1 gegenüberliegend angeordneten Pneumatikzylindern 45 zu einem von den (nicht gezeichneten) Steuerungsmitteln bestimmten Zeitpunkt eingefädelt werden. Dadurch wird die Drehscheibe 39, wenn sie vom Schlitten 11 linear mitbewegt wird, gleichzeitig in eine Drehung um ihre Drehachse versetzt, die auch auf das Stanzwerkzeug 21 übertragen wird.

Gemäß Fig. 2 sind am hinteren und vorderen Totpunkt des Bewegungshubs des Schlittens 11 bzw. an den entsprechenden Rück- und Vorderseiten des Maschinenrahmens 1 Zentriergabeln 47a, 47b an den jeweiligen Innenwandungen befestigt, wie aus Fig. 3 es noch deutlicher hervorgeht. Nach der in Fig. 2 gezeigten Stellung ist zwischen die beiden Zinken 49 der Zentriergabel 47b für den in Teigtransportrichtung 9 vorderen Totpunkt des Schlittenhubs ein Zentrierzapfen 51 eingerückt, wodurch der Werkzeugträger 23 in oder parallel zur Transportrichtung in der vorderen Teigstück-Ablageposition geführt und positioniert ist. Entsprechendes gilt für die hintere Zentriergabel 47a im Zusammenhang mit der Zentrierung und Fixierung des Werkzeugträgers 23 in Stanzposition. Die Zentrierbolzen 51 für die beiden Zentriergabeln 47a, 47b sind jeweils an der Unterseite der Drehscheibe 39 befestigt. Die vordere Zentriergabel 47b positioniert den Werkzeugträger so, daß das Stanzwerkzeug 21 mit seiner Längsrichtung parallel zur Teigtransportrichtung 9 verläuft, wohingegen bei Zentrierung durch die hintere Zentriergabel 47a der Werkzeugträger 23 zusammen mit dem Stanzwerkzeug 21 um 90° gedreht für die Stanzposition, mit der Längsrichtung quer zur Teigtransportrichtung 9 verlaufend, gestellt ist (siehe auch weiter unten).

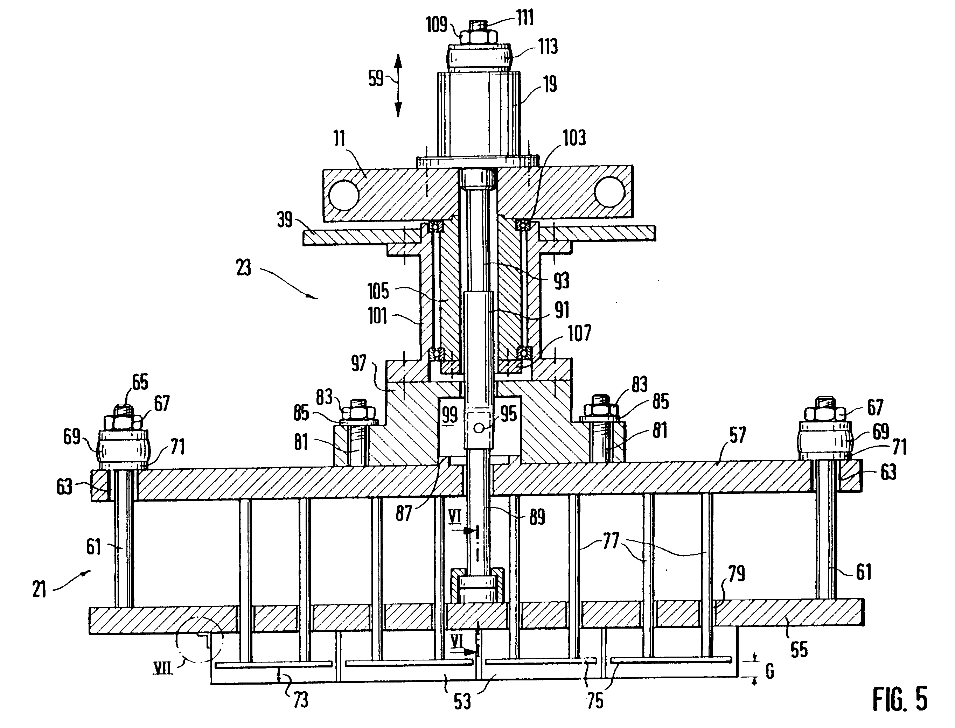

Gemäß Fig. 2 und 4 ist das Stanzwerkzeug 21 in eine Schneidmesser 53 an der Unterseite tragende Halteplatte 55 und eine darüber angeordnete Basisplatte 57 mit der Schnellwechseleinrichtung 35 auf der Oberseite zum Werkzeugträger 23 untergliedert. Wie auch näher aus Fig. 5 ersichtlich, ist die Schneidplatte 55 gegenüber der Basisplatte 57 in Stanzhubrichtung 59 mittels Führungssäulen 61 an den beiden Längsenden des Stanzwerkzeugs 21 verschiebbar geführt. Die Führungssäulen 61 sind an der Oberseite der Schneidplatte 55 starr fixiert und durchsetzen Führungsbohrungen 63 an den beiden Längsenden der Basisplatte 57. Am oberen Ende enden die Führungssäulen 61 in Außengewindevorsprünge 65, auf die jeweils eine Stellmutter 67 aufgeschraubt ist. Mit dieser kann eine die Führungssäule 61 umfassende Elastomerfeder 69 gespannt und der entsprechende Federweg eingestellt werden. An der oberen und unteren Stirnseite der Elastomerfeder 69 sind jeweils Beilagscheiben 71 angebracht. Durch Einstellung des Federwegs mittels der Stellmutter 67 läßt sich der Rückhub der Schneidplatte 55 einstellen, damit bei Beendigung des Stanzvorgangs der Stanzhub-Pneumatikzylinder 19 zurückgestellt wird. Die Elastomerfeder 69 ist vorzugsweise aus Polyurethan hergestellt, und die beiden Beilagscheiben 71 zwischen den Elastomerfeder-Stirnseiten einerseits und der Stellmutter 67 bzw. der Basisplatten-Oberseite andererseits dienen der besseren Verteilung des Drucks aus der Stellmutter 67 auf die Federelemente 69. Mit dem Versetzen des Stanzhub-Pneumatikzylinders 19 in den drucklosen Zustand unmittelbar nach Durchschneiden des Teigbands in Teigstücke können die Elastomerfedern 69 die Schneidplatte 55 gegenüber der Basisplatte 57 nach oben in eine Stellung drükken, in welcher das Stanzwerkzeug 21 mit den ausgeschnittenen Teigstücken über das Stanzwerkzeug-Unterteil 33 gleiten kann.

In Fig. 5 ist das Stanzwerkzeug 21 in der Stanzstellung gezeichnet, das heißt, die Schneidmesser 53 überragen mit ausreichendem Überstand 73 Niederhalteplättchen 75 beispielsweise aus Kunststoff, die an unteren Enden von Führungsstangen 77 befestigt sind und sich jeweils zwischen den einander zugewandten Innenseiten der die Teigstück-Konturen abbildenden Schneidmesser 53 erstrecken. Am anderen Ende sind die Führungsstangen 77 an der Unterseite der Basisplatte 57 starr befestigt und durchsetzen von dort aus die Schneidplatte 55 in jeweiligen Führungsbohrungen 79 bis zu den Niederhalteplättchen 75 am unteren Ende, die dem Halten der ausgeschnittenen Teigstücke während des Transports auf dem Stanzwerkzeug-Unterteil 33 und dem Abstreifen und Auswerfen der Teigstücke in die ausgerichtete Ablageposition (siehe unten) dienen. Bei dieser Anordnung können sich die Schneidmesser 53 und die Niederhalteplättchen 75 relativ zueinander auf- und abwärtsbewegen. Werden die Schneidmesser 53 bei entsprechender Ansteuerung bzw. Betätigung des Stanzhub-Pneumatikzylinders 19 um den Weg G nach oben bewegt, können sich zwischen den Schneidmessern 53 befindliche- und gar geklemmte Teigstückpartikel abgestriffen werden. Für den Produktwechsel ist das Stanzwerkzeug 21 über die Schnellwechseleinrichtung 35 (siehe Fig. 2 oder 4) vom Werkzeugträger 23 abnehmbar gehaltert. Von der Oberseite der Basisplatte 57 beidseits des Werkzeugträgers 23 nach oben ragende Führungsbolzen 81 dienen der Führung des Stanzwerkzeugs 21 in komplementären Langlöchern des Werkzeugträgers 23 (nicht gezeichnet). Die Höhe der Führungsbolzen 81 ist geringfügig niedriger als die Wanddicke im entsprechenden Aufnahmeteil des Werkzeugträgers 23, so daß die Basisplatte 57 mittels eines Schrauben- oder Mutterelements 83 gegen den Werkzeugträger 23 gezogen und fixiert werden. Beim Hineinscheiben in den Werkzeugträger 23 wird das Stanzwerkzeug 21 von Tragscheiben 85 unmittelbar unterhalb der Stirnseite der Schrauben/Mutterelemente 83 gehalten. Innerhalb eines als ringartiger Vorsprung ausgebildeten Zentrierbundes 87, welcher die exakt mittige Position des Stanzwerkzeugs 21 im Werkzeugträger 23 gewährleistet, erstreckt sich die Anschlußstange 89 des Stanzwerkzeugs nach oben zum Anschlußstück 91 der Kolbenstange 93 des pneumatischen Stanzhubzylinders 19. Die Verbindung zwischen dem Kolbenstangen-Anschlußstück 91 und der Anschlußstange 89 des Stanzwerkzeugs 21 läßt sich mittels einer (schematisch angedeuteten) Quer-Schraubverbindung 95 bewerkstelligen.

Gemäß Fig. 5 weist der Werkzeugträger 23 einen den Zentrierbund 87 umgebenden Schraubblock 97 auf, der auf die Oberseite der Basisplatte 57 des Stanzwerkzeugs 21 aufgesetzt und über die Führungsbolzen 81 mit Verschraubung 83 damit verbunden ist. Die Anschlußstange 89 sowie das daran angeschraubte Anschlußstück 91 der Kolbenstange 93 sind in einem Befestigungshohlraum 99 aufgenommen, der innerhalb des Schraubblocks 97 ausgebildet ist. Er kann als Schlitz ausgeführt sein, über dessen Mantelfläche das Stanzwerkzeug 21 mittels seines Zentrierbunds 87 zentriert angebracht ist. Der Schraubblock 97 ist mit einer Rotationsummantelung 101 verbunden, zum Beispiel verschraubt, die über Drehlagerstellen 103 gegenüber einer Innebüchse 105 drehbar gelagert ist. Die Innenbüchse 105 ist auf ihrer oberen Stirnseite mit dem Schlitten 11 an dessen Unterseite fest verbunden, beispielsweise verschraubt. Die Rotationsummantelung 101 ist am oberen Ende mit der Drehscheibe 39 an oeren Unterseite verbunden, beispielsweise verschraubt. So kann die Drehscheibe 39, wenn sie vom Linearantriebssystem ihrer Drehungen ableitet, diese auf den Werkzeugträger 23 bzw. dessen Schraubblock 97 übertragen. Gegenüber der von der Drehscheibe 39 in Rotation versetzten Rotationsummantelung 101 verbleibt der Kern des Werkzeugträgers 23, die Innenbüchse 105, im Stillstand, weil das Drehmoment aufgrund der am oberen und unteren Ende der Innenbüchse 105 angebrachten Drehlagerung 103 nicht übertragen werden kann. Gegen axiales Verschieben ist die Innenbüchse 105 durch eine Sicherungsscheibe 107 am unteren, stirnseitigen Ende gesichert, welche das Kolbenstangen-Anschlußstück 91 umgibt. Auf dem Schlitten 11 montiert ist der Stanzhub-Pneumatikzylinder 19 zur Herbeiführung von Stanzbewegungen der Schneidplatte 55 mit den Schneidmessern 53. Die Stanztiefe läßt sich mittels einer Zylinder-Stellmutter 109 einstellen, welche auf einem Außengewindevorsprung 111 aufgeschraubt ist, der stirnseitig aus dem pneumatischen Stanzhubzylinder 19 am oberen Ende vorspringt. Eine unmittelbar an der unteren Stirnseite der Zylinderstellmutter 109 angeordnete Gummifeder 113 dient der Bewegungsdämpfung beim Fahren in die Endlage.

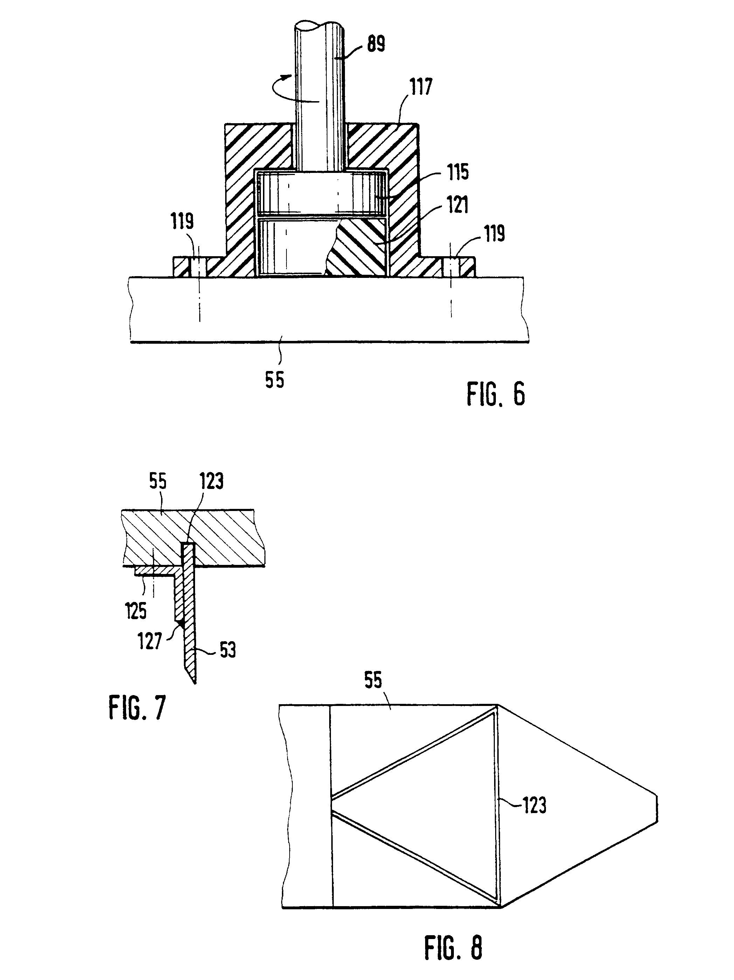

Damit sich die Drehbewegung der Rotationsummantelung 101 des Werkzeugträgers 3 nebst der des Schraubblocks 97 sich nicht auf die Kolbenstange 93 und dessen Anschlußstück 91 des pneumatischen Stanzzylinders 19 überträgt, ist gemäß Fig. 6 die Anschlußstange 89 des Stanzwerkzeugs 21, die an ihrem unteren Ende eine stempelartige Erweiterung 115 aufweist, damit in einem Kunststoffgehäuse 117 aufgenommen und drehbar gelagert. Dieses ist auf der Oberseite der Schneidplatte 55 befestigt, beispielsweise mittels Schraubstellen 119. Innerhalb des Kunststoffgehäuses 117 unmittelbar unterhalb der Unterseite der Stempelerweiterung 115 befindet sich eine Gleitlagerscheibe 121, welche der axialen Kraftübertragung vom pneumatischen Stanzhubzylinder 19 auf die Schneidplatte 55 des Stanzwerkzeugs 21 dient. Auch letztere ist - wie das Gehäuse 117 - insbesondere aus Gründen der Geräuschdämpfung und Reibung mit Kunststoff hergestellt. Die Basisplatte 57 des Stanzwerkzeugs 21 ist über die Schraubverbindung 81, 83, 85 fest mit dem drehbaren Teil 97, 101 des Werkzeugträgers 23 verbunden. Die sich gegebenenfalls drehende Schneidplatte 55 läßt sich durch den von der Drehung entkoppelten pneumatischen Stanzhubzylinder 19 auf- und niederbewegen, wobei sich die Führungssäulen 61 in den Führungsbohrungen 63 der Basisplatte 57 entsprechend mitheben oder -senken.

In Fig. 7 ist die Befestigung der Schneidmesser 53 in einer eingefrästen Messeraufnahmenut 123 vergrößert dargestellt. Zur Befestigung und Stabilisierung dient ein im Profil L-förmiger Befestigungswinkel 125, bei dem die Außenseiten der beiden L-Schenkel sowohl an der Unterseite der Schneidplatte 55 verschraubt als auch an der Innenwandung des Schneidmessers 53 mittels einer Schweißstelle 127 fixiert sind.

Die Fig. 8 zeigt eine Ansicht ohne bzw. mit entferntem Schneidmesser, wobei die in die Unterseite der Schneidplatte 55 eingefräste Aufnahmenut 123 mit ihrer Kontur eines gleichschenkligen Dreiecks - entsprechend des auszuschneidenden Teigstücks - deutlich sichtbar wird. Diese Messeraufnahmenut 123 ist gleichsam als Einsetzschablone für alle Schneidmesser relevant, die zueinander mit größtmöglicher Präzision symmetrisch liegen müssen.

Gemäß Fig. 1 und 2 ist unterhalb des Maschinenrahmens 1 das Stanzwerkzeug-unterteil 33 angeordnet, welches im konkreten Ausführungsbeispiel durch einen ersten Zuführ-Förderbandtisch 129 und einem zweiten Wegführ-Förderbandtisch 131 realisiert ist. Auf dem ersten Förderbandtisch 129 werden die Teigstücke aus dem kontinuierlichen Teigband ausgeschitten bzw. ausgestanzt. Zu diesem Zweck ist wenigstens der erste Förderbandtisch 129 mit einer schnittfesten Oberfläche versehen. Der zweite Förderbandtisch 131 dient der Ablage der Teigstücke aus dem Stanzwerkzeug 21, die vom ersten Förderbandtisch über den gemeinsamen Stoß bzw. Spalt 133 zwischen den beiden Tischen 129, 131 zum zweiten Förderbandtisch 131 in Förderrichtung 9 abwärts mittels des Stanzwerkzeugs 21 transportiert bzw. verschoben wurden. Nach Ausstoßen der Teigstücke und Zurückfahren des Stanzwerkzeugs 21 führt der zweite Förderbandtisch 131 die Teigstücke einer Wickeleinheit zu. Gemäß Fig. 2 ist in die Oberseite des ersten Förderband-Zuführtisches 129 mit einer versteiften Schneidunterlage 135 eingesetzt und mit einer Elastomerplatte belegt, die als Gegenlager oder Stanzwerkzeug-Unterteil für die Schneidmesser 53 dient und für eine ausreichende Ebenheit und Elastizität des Gegenlagers sorgt.

Nachfolgend wird das erfindungsgemäße Verfahren im Zusammenhang mit der Funktionsweise der erfindungsgemäßen Vorrichtung erläutert.

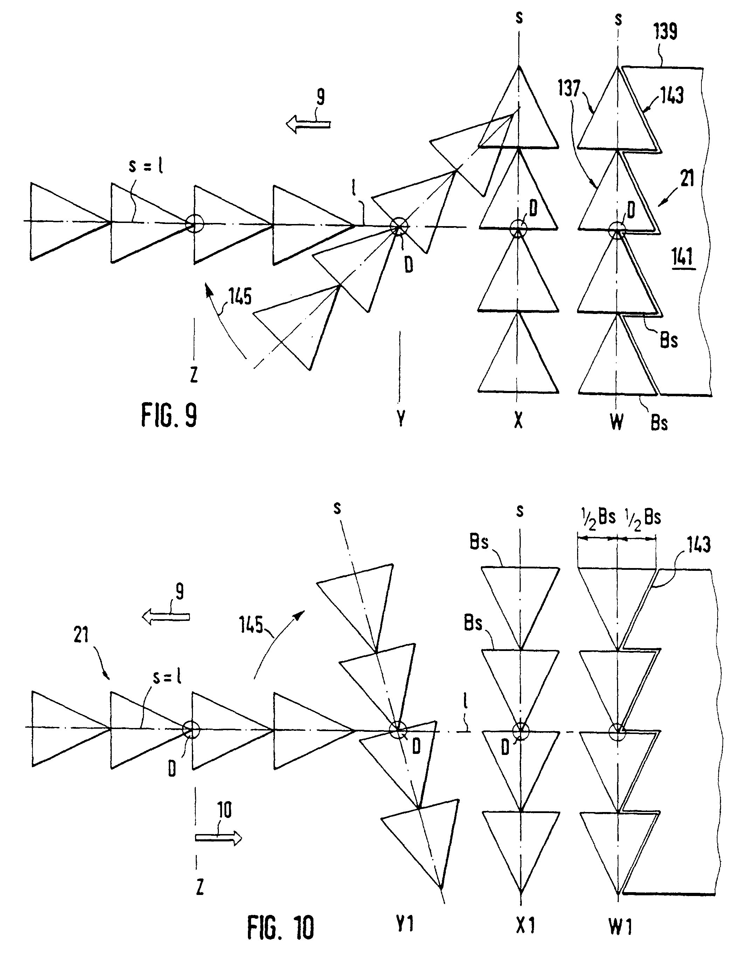

In den Fig. 9 und 10 ist ein vollständiger Bewegungszyklus der Schneidkontur des Stanzwerkzeugs für den konkreten Anwendungsfall der Croissant-Herstellung aus Teigstücken mit der Kontur eines gleichschenkligen Dreiecks gezeigt. Im gezeichneten Ausführungsbeispiel besitzt das Stanzwerkzeug vier übereinstimmende Schneidkonturen gleichschenkliger Dreiecksform jeweils mit der Basisseite Bs. Diese verläuft in der Stellung W für Ausstanzen parallel zum Rand 139 des kontinuierlich zugeführten Teigbandes 141 (eine getaktete Zuführung ist grundsätzlich auch möglich). Die Symmetrieachse s der gleichschenkligen Schneidkonturen 137 verläuft in Stellung W senkrecht zum Teigbandrand 139 bzw. zur Teigtransportrichtung 9. Während des Ausstanzens eines Verbands gleichschenklig dreieckförmiger Teigstücke wird das das Teigband 139 tragende Förderband zweckmäßig kurz angehalten. Nach Vollendung des Stanzvorgangs wird der Verbund an Schneidkonturen 137 zunächst linear in Transportrichtung 9 bewegt, bis eine bestimmte Stellung X erreicht ist, in der ausreichend Platz und Entfernung zum verbliebenen, sägezahnartig ausgestanzten Stirnrand 143 des Teigbandes 141 verblieben ist. Nun kann die Drehung des Stanzwerkzeugs bzw. des Verbunds an Schneidkonturen 137 um den zwischen den beiden mittleren Schneidkonturen gelegenen Drehpunkt D eingeleitet werden. Die Drehung erfolgt im gezeichneten Beispiel im Uhrzeigersinn 145. Mit dieser zunehmenden Drehung, die etwa in bzw. auf einer dem Teigband 141 entsprechenden Ebene erfolgt, wird gleichzeitig die lineare Fortbewegung des Stanzwerkzeugs 21 derart fortgesetzt, daß der Drehpunkt auf einer Linie I in Teigtransportrichtung 9 stetig fortwandert, die zweckmäßig der Mittellinie bzw. Mittelachse des Teigbandes 141 entspricht. Die halbe Vollendung der Drehbewegung 145 etwa im Winkelumfang von 45° ist als Zwischenstellung Y dargestellt. Mit Weiterführung bzw. Vollendung der Drehung nach Durchlaufen eines Winkels von 90° aus der Stellung W/X in die Stellung Z für Teigstückablage ist auch gleichzeitig der Drehpunkt bzw. die Drehachse D linear weiter in Transportrichtung 9 verschoben worden, und die Symmetrieachse s ist zur Deckung mit der Teigband-Mittellinie I gekommen. Sind in der Stellung Z die innerhalb der Schneidkonturen 137 mitgeführten Teigstücke beispielsweise mittels der Niederhalteplättchen 75 (vgl. Fig. 5) ausgestoßen worden, wird die Linearbewegung für das Stanzwerkzeug 21 umgekehrt in eine Gegenrichtung 10 entgegen der Teigtransportrichtung 9 (Fig. 10). Mit zunehmender Rückbewegung 10 wird erneut für das Stanzwerkzeug 21 die Drehung 145 im Uhrzeigersinn eingeleitet bzw. weitergeführt, bis die mit Y1 bezeichnete Zwischendrehstellung gemäß Fig. 10 erreicht ist. Mit weiterer Bewegung des Stanzwerkzeugs 21, wobei die Rück-Linearbewegung 10 und die Drehbewegung 145 einander überlagert sind, wird schließlich die Stellung X1 gemäß Fig. 10 erreicht, welche der Stellung X in Fig. 9 entspricht. Beide Stellungen zeichnen sich dadurch aus, daß die Dreieck-Symmetrieachse s nunmehr senkrecht zur Teigband-Mittellinie I liegt. Während des gesamten Bewegungsablaufs ist der Stanzwerkzeug-Drehpunkt D stets auf der Mittellinie I zunächst nach Fig. 9 in Teigtransportrichtung 9 und nach Teigstück-Ablage in Teigtransport-Gegenrichtung 10 (zurück-) gewandert. Die Basis des gleichschenkligen Dreiecks liegt in der Stellung X1 wieder parallel zum Teigbandrand 139. Da nach Teigstück-Ablage gemäß Stellung Z die Drehung im gleichen Uhrzeigersinn 145 fortgesetzt wurde, ist nun in der Stellung X1 das Stanzwerkzeug 21 gegenüber der entsprechenden Stellung X in Fig. 9 um genau 180° gedreht, so daß die Dreieckspitzen (den Basisseiten Bs gegenüberliegend) in Fig. 10 nach unten gerichtet sind (während sie in Fig. 9 nach oben gerichtet sind). Mit weiterer Linear-Rückbewegung 10 können nun die Schneidkonturen genau deckungsgleich über den nach Fig. 9 in Stellung W ausgeschnittenen, sägezahnförmigen Stirnrand 143 des Teigbandes 141 in Stellung kommen, wie in Fig. 10 mit W1 bezeichnet. Da die Stellungen W, W1 des Stanzwerkzeugs für den Ausstanzvorgang zweckmäßig identisch sind, muß das Teigband während des Durchlaufens der Stellungen X-Y-Z-Y1-X1-W1 durch das Stanzwerkzeug 21 um eine Strecke in Teigtransportrichtung 9 verfahren worden sein, die der Hälfte der Länge der Basisseite Bs entspricht. Unter diesen genannten Voraussetzungen können die in Teigtransportrichtung 9 gewandten Schrägseiten der Dreieck-Schneidkonturen 137 deckungsgleich bzw. bündig über den beim vorherigen Stanzvorgang verbliebenen Sägezahn-Stirnrand 143 des Teigbandes 39 zu liegen kommen für einen bündigen, restteigfreien Stanzvorgang.

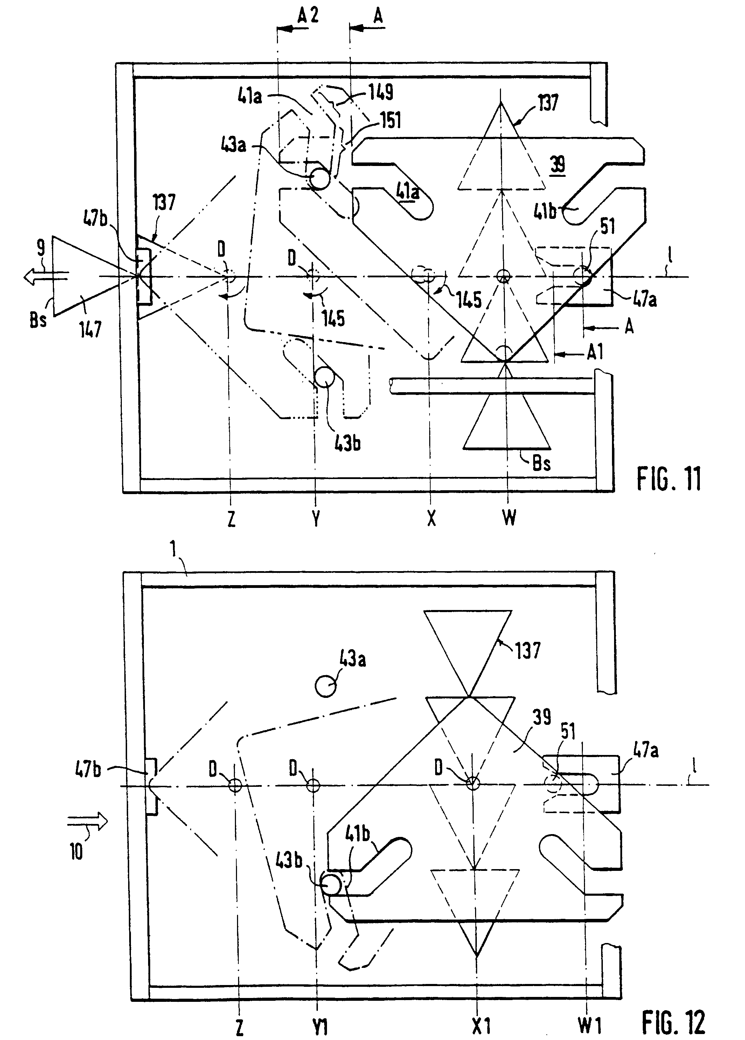

In Fig. 11 und 12 sind die den soeben erläuterten Verfahrensabläufen entsprechenden Bewegungsabläufe der Drehscheibe 39 zur Verstellung des Stanzwerkzeugs 21 im Sinne des erfindungsgemäßen Verfahrens gezeigt. Die in der Draufsicht in verschiedenen Bewegungsstationen teilweise abgebrochen dargestellte Drehscheibe 39 ist mit dem Werkzeugträger 23 und dem Stanzwerkzeug 21 drehverbunden (siehe oben) und verstellt und dreht diese in die Stellung W, W1 zum Stanzen und in die Stellung Z zum ausgerichteten Ablegen. Der Drehpunkt bzw. das Drehlager D bewegt sich - analog zu Fig. 9 und 10 - linear genau auf der Mittellinie I des auszustanzenden Teigbandes.

Gemäß Fig. 11 befindet sich in der Stellung W der Verbund an Schneidkonturen 137 an der Unterseite des Stanzwerkzeugs unterhalb der Drehscheibe 39 in Stanzposition. Die Basisseite Bs der Schneidkonturen 137 verläuft parallel zur Längsseite und weist in Fig. 11 nach unten. In der Stellung Z zum ausgerichteten Ablegen von Teigstücken 147 ist die Drehscheibe 39 bzw. der Verbund an Schneidkonturen 137 um 90° im Uhrzeigersinn 145 gedreht. Dabei weist die Basisseite Bs der gleichschenkligen Schneidkonturen 137 in Teigtransportrichtung 9 nach vorne; entsprechendes gilt für die Basisseite Bs der Teigstücke 147, mit denen sogleich ein nachgeschalteter Wickler (nicht gezeichnet) beschickt werden kann. In der Stellung W zum Ausstanzen ist die Drehscheibe 39 durch den Zentrierzapfen 51 in der hinteren Zentriergabel 47a genau zentriert, damit die Schneidkonturen 137 deckungsgleich bzw. bündig mit dem sägezahnförmigen Stirnrand 143 des Teigbandes 141 einzelne Teigstücke 147 präzise ausstanzen können. Nach Beendigung des Stanzvorgangs wird der Schlitten 11 mit der daran angelenkten Drehscheibe 39 zunächst ausschließlich linear in Teigtransportrichtung 9 bis zur Stellung X bewegt, wo die Drehung 145 jm Uhrzeigersinn der Drehscheibe 39 eingeleitet wird. Dabei sorgt der Zentrierzapfen 51, solange er sich in der hinteren Zentriergabel 47a befindet (Strecke A - A1), für ein zentriertes Entfernen der Teigstücke und des Verbundes an Schneidkonturen vom Stirnrand des Teigbandes. In der Stellung X ist die Einleitung der Drehung 145 der Drehscheibe 39 möglich. Dazu ist nach Meldung der Stellung X an die Steuermittel von diesen der entsprechende Drehscheiben-Pneumatikylinder 45 so anzusteuern, daß die in Transportrichtung 9 rechte Kolbenstange 43a ausgefahren wird und in Eingriff mit der entsprechenden Führungsaussparung 41a der Drehscheibe 39 kommen kann. Nach Verfahren des Weges A - A1 befindet sich die Fig. 11 rechte Kolbenstange 43a unmittelbar am Eingang der rechten Führungsaussparung 41a, die einen ersten Anfangsabschnitt 149 und einen dazu schrägwinkligen, zweiten Endabschnitt 151 aufweist. Der sich in Transportrichtung 9 rechts von der Mittellinie I befindliche Kolben 43a erteilt mit zunehmender Linearverschiebung der Drehscheibe 39 eine Drehung 145 im Uhrzeigersinn, nämlich ab Erreichen der Position A2. In dieser Stellung liegt die Kolbenstange 43a an der Kante des zweiten, hinteren Endabschnitts 151 der Führungsaussparung 41. Mit weiterer Linearverschiebung des Schlittens 11 in Transportrichtung 9 und der Drehscheibe 39 wird die Drehung 145 im Uhrzeigersinn solange weitergeführt, bis ein Drehwinkel von 90° vollendet ist. Dies wird von einer (nicht gezeichneten) Sensorik erfaßt und Steuermitteln gemeldet, die daraufhin den entsprechenden Pneumatikzylinder 45 so ansteuern, daß die entsprechende Kolbenstange 43a zurückgezogen wird. Die in Transportrichtung 9 vordere Zentriergabel 47b übernimmt nun die Führung der Drehscheibe 39 und hält diese so, daß das Stanzwerkzeug 21 mit dem Verbund an Schneidkonturen 137 in eine zentrierte Ablageposition für die Teigstücke 147 mit deren Basisseite Bs nach vorne weisend kommt.

Sind die Teigstücke 147 frei auf dem Wegführ-Förderbandtisch 131 abgelegt, wird gemäß Fig. 12 von Steuermitteln der entsprechende Pneumatikzylinder 45 für die in Transportrichtung 9 links von der Mittellinie I angeordnete Kolbenstange 43b angesteuert, so daß diese zum Einfädeln bzw. Einrücken in die zugeordnete Führungsaussparung 41b, zweiter hinterer Endabschnitt 151, ausgefahren wird. Mit weiterer, umgekehrter Linearverschiebung des Schlittens 11 in die Teigtransport-Gegenrichtung 10 wird aufgrund des Eingriffs mit der linken Kolbenstangen 43b die bisherige Drehung 145 im Uhrzeigersinn weitergeführt. Überlagert mit der gleichzeitigen Linear-Rückbewegung 10 erreicht so die Drehscheibe 39 die Stellung X1, in der die linke Kolbenstange 43b außer Eingriff mit der linken Führungsaussparung 41b gelangt und/oder in den entsprechenden Pneumatikzylinder 45 zurückgefahren wird. Von da ab erfolgt die Rückbewegung 10 rein linear, wobei der in Teigtransportrichtung 9 hintere Zentrierzapfen 51 zur symmetrischen Zentrierung bzgl. der Mittellinie I in die Teigtransportrichtung hintere Zentriergabel 47a erneut einrückt. Damit hat das Stanzwerkzeug insgesamt eine Drehbewegung 145 von 180° im Uhrzeigersinn vollführt, so daß die Basisseiten der gleichschenkligen Schneidkonturen 137 im Vergleich zu der Anordnung nach Fig. 11 der anderen Längsseite des Teigbandes zugewandt sind. Mit weiterer Linearverschiebung gelangt der Zentrierzapfen 51 in Anschlag in der hinteren Zentriergabel 47a, womit die neue, um 180° gedrehte Stanzposition W1 erreicht ist. Nach dem Ausstanzen verbleibt dann ein stirnseitiger Teigbandrand, der der Sägezahnform in Fig. 10 entspricht, die gegenüber der Sägezahnform des Teigbandrandes in Fig. 9 um 180° phasenverschoben ist.

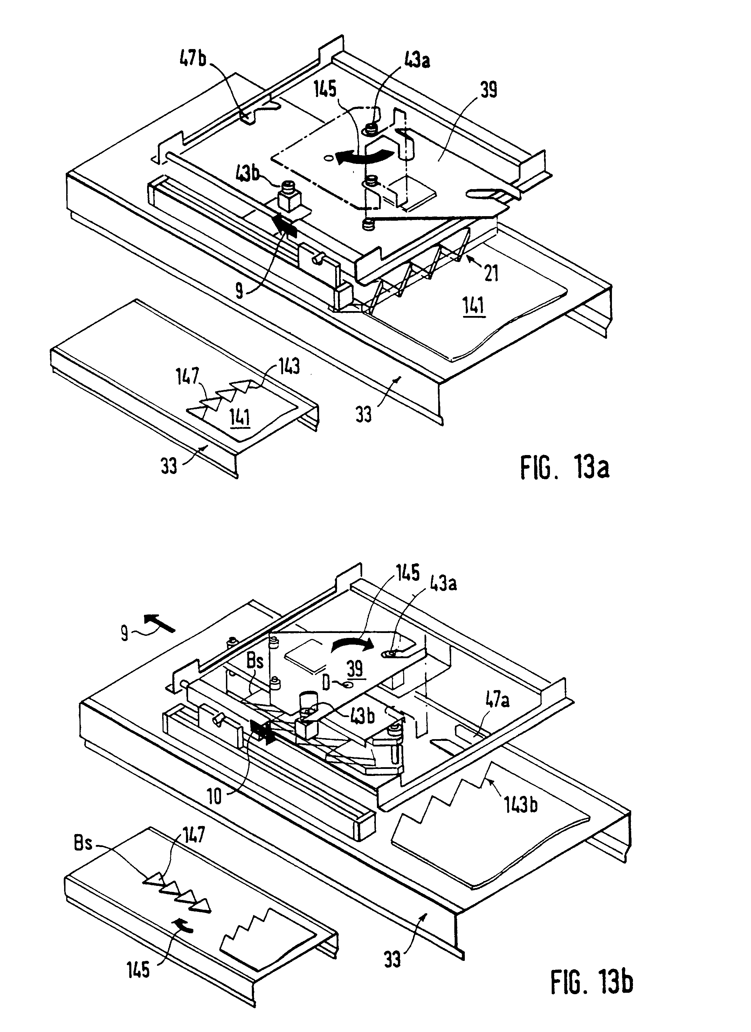

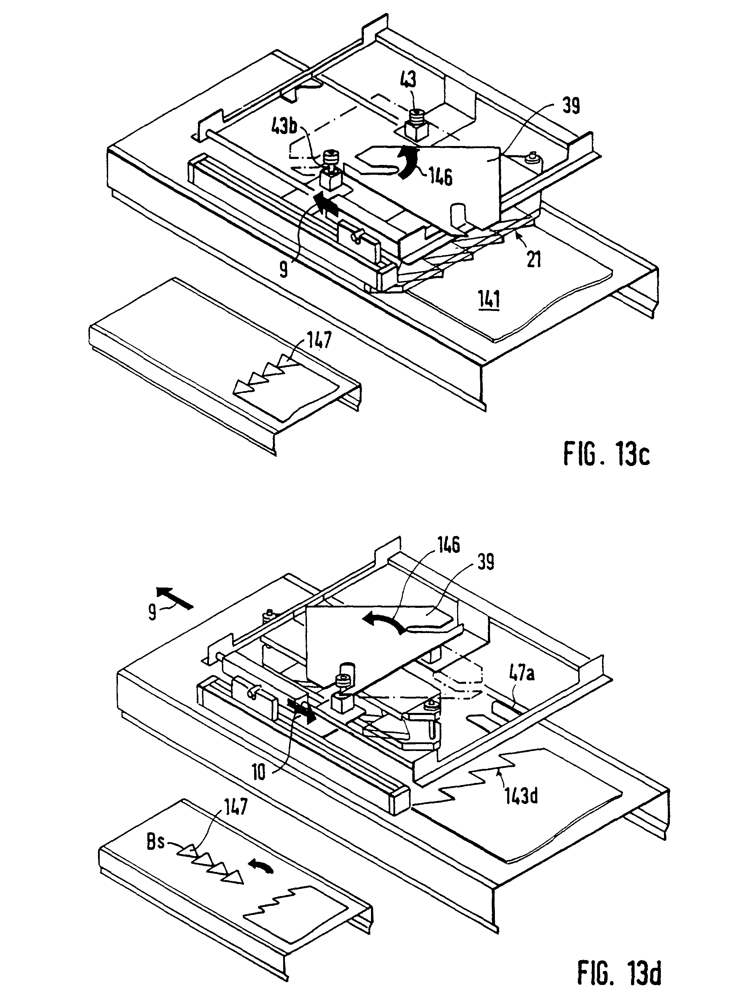

Die Fig. 9 und 10 bzw. 11 und 12 beschreiben jeweils einen halben Arbeitszyklus der Stanzmaschine, und mit erneuter Linearbewegung aus der Stellung W1 in Teigtransportrichtung 9 erfolgt die Drehung der Drehscheibe 39 umgekehrt entgegen den Uhrzeigersinn, wobei bis zum erreichen der Ablageposition die in Teigtransportrichtung 9 linke Kolbenstange 43b ausgefahren und für die Rückbewegung 10 dann die in Teigtransportrichtung 9 rechte Kolbenstange 43a des jeweiligen Pneumatikzylinders 45 für die Drehscheibe 39 aktiviert wird. Der vollständige Arbeitszyklus wird nachstehend näher anhand der Fig. 13a - d veranschaulicht.

Gemäß Fig. 13a wartet das Stanzwerkzeug 21 in der Stellung W (vgl. Fig. 9 und 11), bis das Teigband 141 um die halbe Länge der Basisseite Bs des gleichschenkligen Konturendreiecks in Teigbandförderrichtung 9 verfahren worden ist. Die präzise Position von Stanzwerkzeug 21 nebst Schlitten 11 oder Drehscheibe 39 wird durch die Fixierung über Drehlagerung D und Zentrierzapfen 51 erreicht. Dies ist notwendig, um die Teigstücke 147 konturengleich auszustanzen. Von Stanzhub zu Stanzhub erfolgt eine Drehung des Stanzwerkzeugs um 180°, was auch eine absolute Symmetrie des Stanzwerkzeugs bzgl. der Symmetrieachse s (vgl. Fig. 9 und 10) bedingt. Das Verfahren des Teigbandes um die halbe Basisseitenlänge läßt sich mit einem Zähler erfassen, der dann ein entsprechendes Signal an Steuermittel abgibt, woraufhin der Stanzhub ausgelöst wird. Dabei wird der Stanzhub-Pneumatikzylinder 19 mit Druck beaufschlagt und drückt das Stanzwerkzeug 21 mit seinen Schneidkonturen 137 bzw. Schneidmessern 53 durch das Teigband 141. Damit dieses vollständig durchschnitten wird, ist die Stanzwerkzeug-Unterlage 33 in der Schneidstellung W, W1 mit einer ebenen Platte als versteifte Schneidunterlage 135 versehen, worüber eine Gummimatte als weiche Auflage gelegt sein kann. Dadurch ist es möglich, daß die Schneidkante der Schneidmesser 53 des Stanzwerkzeugs 21 geringfügig unter die Unterseite des Teigbandes gerät. Nach dem Durchschneiden wird der Stanzhubzylinder 19 drucklos gestellt, und die Messer werden durch die Federelemente 69, die während des Stanzvorganges gespannt waren, zurückgezogen und bleiben geringfügig über dem Stanzwerkzeug-Unterteil 33 stehen. Dadurch kann das Stanzwerkzeug 21 über die Oberfläche des Unterteils 33, beispielsweise eines Förderbandtisches, geführt werden oder gleiten, ohne zu klemmen oder zu verkannten. Während des Stanzhubs steht das Förderband, wenn ein solches als Stanzwerkzeug-Unterteil verwendet wird, still, um eine größtmögliche Stanzgenauigkeit zu erreichen. Sodann erfolgt, wie in Fig. 13a mit der linearen Teigtransportrichtung 9 und der Drehung 145 im Uhrzeigersinn angedeutet, der Transport der ausgestanzten Teigstücke 147. Diese werden dabei zwischen den Schneidmessern 53 des Stanzwerkzeuges 21 gehalten und geführt und in einer zunächst ausschließlich linearen Bewegung (W-X) aus dem Teigband 141 herausgeführt. Mit Vollendung der Uhrzeigersinn-Drehung 145 um 90° kommen die Teigstücke 145 mit ihrer Basisseite Bs nach vorne weisend in eine Lage zur Weiterverarbeitung durch einen nachgeschalteten Wickler. Dies läßt sich aus Fig. 13b erkennen. Danach wird am hinteren Todpunkt in der Stellung Z des Schlittens 11 der Verband der Teigstücke 147 mittels der Niederhalteplättchen 75 zwischen den Schneidmessern 53 ausgestoßen und vorzugsweise auf den Wegführ-Förderbandtisch 131 ausgerichtet abgelegt, der die Teigstücke 147 einer nachfolgenden (nicht gezeichneten) Bearbeitungsstation, zum Beispiel Wickler, zuführt. Die Ausstoßbewegung erfolgt durch Druckbeaufschlagung des Stanzhub-Pneumatikzylinders 19 in umgekehrter, von der Teigbandoberfläche wegweisender Richtung. Dabei werden die vorher zwischen den Schneidmessern 53 sich befindenden Teigstücke 147 von diesen frei. Sollten zwischen den Schneidmessern 53 noch Teigstückreste mithochgezogen werden, streifen die sich über den Teigstücken 147 befindlichen Niederhatlteoder Abstreifplättchen die Teigstückereste von den Schneidmessern 53. Gemäß Fig. 13b wird der Drehscheibe 39 nach dem Ausstoßen die lineare Rückbewegung 10 entgegen der Teigtransportrichtung 9 erteilt, wobei die Drehplatte 39 nebst Stanzwerkzeug 21 weiter im Uhrzeigersinn um weitere 90° gedreht wird. Dazu wird die in Teigtransportrichtung 9 linke Kolbenstange 43b zum Einrücken in die zugeordnete Führungsaussparung 41b ausgefahren und komplementär dazu die rechte Kolbenstange 43a aus der zugeordneten Führungsaussparung 41a durch Einfahren in den zugeordneten Pneumatikzylinder entfernt. In Fig. 13a ist genau umgekehrt die rechte Kolbenstange 43a ausgefahren und die linke Kolbenstange 43b inaktiv.

Gemäß Fig. 13c ist das Stanzwerkzeug 21 nun in einer gegenüber der Stanzposition nach Fig. 13a um 180° gedrehten Stellung positioniert. Die Basisseite Bs der gleichschenkligen Schneidkonturen bzw. Teigstücke 147 weist dabei gegen den in Teigtransportrichtung 9 rechten Teigrand. Nach Ausstanzen der Teigstücke 147 wird die Linearverschiebung in Teigtransportrichtung 9 eingeleitet, wobei der Drehscheibe 39 eine Drehung 146 entgegen dem Uhrzeigersinn erteilt wird. Dazu ist die in Teigtransportrichtung 9 linke Kolbenstange 43b in die zugeordnete Führungsaussparung 41b ausgefahren. Die rechte Kolbenstange 43a wird im zugehörigen Pneumatikzylinder eingefahren bzw. inaktiv gehalten. Der weitere Bewegungsablauf erfolgt wie oben erläutert, jedoch um 180° seitenverkehrt. Dabei werden die Teigstücke 147 wie aus Fig. 13d, unten, ersichtlich, ebenfalls mit der Basisseite Bs in Teigtransportrichtung 9 bzw. nach vorne weisend abgelegt für den weiteren Wickelvorgang. Auch die Sägezahnform des Stimrandes 143b des Teigbandes 141 ist gegenüber dem Sägezahn-Stirnrand 143b nach Fig. 13b um 180° phasenverschoben.

## Patentansprüche

1. Verfahren zur Herstellung von einzelnen Teigstücken (147) aus einer kontinuierlichen Teigbahn (141), indem in den Endabschnitt der Teigbahn (141) eine schräg oder quer zur Bahnlängsrichtung (9,1) verlaufende Reihe von separaten, jeweils in sich geschlossenen Konturen ausgeschnitten wird, welche den Teigstücken (147) entsprechen, diese in Reihe nebeneinander liegenden Konturen beziehungsweise Teigstücke (147) vom Bahnende (143) entfernt und zur Weiterverarbeitung gedreht (145,146) oder verschwenkt oder sonstwie positioniert abgelegt werden, wobei zum Schneiden eines oder mehrere Stanzwerkzeuge (21) jeweils mit einem Oberteil (55,57) verwendet werden, das einen oder mehrere, die Konturen erzeugende Schneidabschnitte (137) zur Erzeugung der Teigstückreihe (147) aufweist, **dadurch gekennzeichnet, daß** das oder die Stanzwerkzeuge (21), die vorher zum Ausschneiden der Teigstückreihe (147) am Bahnende (13) eingesetzt wurden, mittels ganz oder teilweise linearer Bewegung (9) vom Bahnende (143) entfernt und positioniert werden, wobei die vorher geschnittenen Teigstückreihe (147) zwischen den Schneidelementen (53) des Stanzwerkzeug-Oberteiles gehalten, verschoben und dabei vom Bahnende (143) entfernt und positioniert abgelegt wird, und nach dem Ablegen (Z) das oder die Stanzwerkzeuge (21) für ein erneutes Ausschneiden (W,W1) zum Bahnende (143) zurückbewegt werden.

2. Verfahren nach Anspruch 1, **dadurch gekennzeichnet, daß** von den Stanzwerkzeugen ein Teil stationär beziehungsweise ortsfest gehalten und zum Schneiden eines Teils der jeweiligen Teigstückkontur verwendet wird, während ein anderer oder das andere, zur Bewegung der Teigstücke eingesetzte Teil der Stanzwerkzeuge zur Vervollständigung der jeweiligen Teigstückkontur verwendet wird.

3. Verfahren nach Anspruch 1 oder 2, **dadurch gekennzeichnet, daß** die Teigstückreihe unter Verwendung von Greif- oder Pick-up-Einrichtungen gehalten und geführt und/oder verschoben wird.

4. Verfahren nach Anspruch 1, 2 oder 3, **dadurch gekennzeichnet, daß** während und/oder nach dem Entfernen (W-X) vom Bahnende (143) eine Dreh- und/oder Schwenkbewegung (145,146) überlagert oder eingefügt wird.

5. Verfahren nach Ansprüche 3 oder 3 und 4, **dadurch gekennzeichnet, daß** unmittelbar nach dem Stanzen (W,W1) der Teigstückkonturen (135) für das weitere Entfernen (W-X) oder sonstigen Positionieren, Führen, Halten , Drehen (145,146) und/oder Verschieben der Teigstücke (147) der Druck auf das Stanzwerkzeug-Oberteil (55,57) gegen das Stanzwerkzeug-Unterteil (33) soweit zurückgenommen wird, daß das Oberteil (55,57) mit seinen Schneidkanten auf der Oberfläche des Stanzwerkzeug-Unterteils (33) gleiten und/oder darüber bewegt werden kann.

6. Verfahren nach Ansprüche 3, 3 und 4 oder 5, **dadurch gekennzeichnet, daß** als Stanzwerkzeug-Unterteil (33) ein Teigförderband (129) verwendet wird, das mit einer schnittfesten Oberfläche (135) versehen ist.

7. Verfahren nach Anspruch 6, **dadurch gekennzeichnet, daß** das Teigförderband (129) während des Teigstück-Stanzvorgangs (W,W1) angehalten und dann wieder in Bewegung versetzt und/oder getaktet bewegt wird.

8. Verfahren nach Anspruch 6 oder 7, **dadurch gekennzeichnet, daß** nach jedem Stanzvorgang (W,W1) das Teigförderband (129) in Teigförderrichtung (9) um eine Strecke verfahren wird, die der Abmessung der Kontur oder des Teigstücks (147) in Bahnlängsrichtung (I) entspricht.

9. Verfahren nach Anspruch 8, wobei die Kontur beziehungsweise das Teigstück (147) die Form eines gleichschenkligen Dreiecks aufweisen, von dem die Basisseite (Bs) in oder parallel zur Teigbandlängsrichtung (I) verläuft, und das Ausstanzen beziehungsweise Ausschneiden der Teigstücke (147) aus dem Teigband (141) frei von Restteig erfolgt, **dadurch gekennzeichnet, daß** die Verfahr-Strecke der halben Länge der Basisseite (Bs) entspricht.

10. Verfahren nach einem der vorangehenden Ansprüche, **dadurch gekennzeichnet, daß** mehrere, jeweils eine Teigstück-Kontur erzeugende Stanzwerkzeuge (53,137) nebeneinander im Teigbahn-Endbereich (143) angeordnet und im Verbund miteinander oder vereinzelt zueinander synchronisiert und/oder koordiniert betätigt und bewegt werden.

11. Verfahren nach einem der vorangehenden Ansprüche, wobei die in Reihe nebeneinander liegender Konturen beziehungsweise Teigstücke (147) vom Bahnende (143) entfernt (W-X) und zur Weiterverarbeitung gedreht oder verschwenkt (145,146) abgelegt werden, **dadurch gekennzeichnet, daß** mittels des oder der Stanzwerkzeuge (21) die Teigstück-Reihe (147) als ganzes vom Bahnende (143) entfernt und nach Drehen abgelegt wird, wonach das oder die Stanzmittel (21) in ihre Ausschneideposition (W,W1) zum Bahnende (143) zurück bewegt und wieder positioniert, dabei gedreht (145,146) werden.

12. Verfahren nach Anspruch 10 und 11, **dadurch gekennzeichnet, daß** der Stanzwerkzeug-Verbund (21) mit dem ausgeschnittenen Teigstück-Verband (147) mit der Längsrichtung (s) in der oder parallel zur Teigbahn-Transportrichtung (9) ausgerichtet wird.

13. Verfahren nach Anspruch 11 oder 12, wobei die Kontur beziehungsweise das Teigstück (147) die Form eines gleichschenkligen Dreiecks aufweisen, von dem die Basisseite (Bs) in Teigbandlängsrichtung (I) verläuft, und das Ausstanzen (W,W1) beziehungsweise Ausschneiden der Teigstücke (147) aus dem Teigband (141) frei von Restteig erfolgt, **gekennzeichnet durch** eine Drehung (145,146) des oder der Stanzwerkzeuge (21) derart, daß die Teigstücke (147) mit ihrer Basisseite (Bs) jeweils quer zur Teigtransportrichtung (9) verlaufend und in Teigtransportrichtung (9) nach vorne gewandt zur Ablage (Z) kommen.

14. Verfahren nach einem der vorangehenden Ansprüche, **dadurch gekennzeichnet, daß** nach dem Teigstück-Ausschneiden (W,W1) und vor dem Teigstück-Ablegen (Z) das Stanzwekzeug (21) mit den ausgeschnittenen Teigstücken (147) zunächst vom Bahnende linear entfernt (W-X) und dann gedreht (145,146) wird, und/oder nach dem Teigstück-Ablegen (Z) und vor dem Teigstück-Ausschneiden (W,W1) das Stanzwerkzeug (21) ohne die bereits abgelegten Teigstücke (147) zunächst gedreht (145,146) und dann zum Bahnende (143) linear bewegt (10) wird.

15. Verfahren nach einem der vorangehenden Ansprüche, wobei die Schneidkontur (137) des Stanzwerkzeugs (21) beziehungsweise die Teigstückform (147) in bezug auf eine quer zur Bahnlängsrichtung (I) verlaufende Mittelachse (s) symmetrisch ist, **dadurch gekennzeichnet, daß** zwischen jedem Teig-Schneidvorgang (W,W1) das Stanzwerkzeug (21) gegebenenfalls im Verbund miteinander um 180 Grad vorzugsweise in abwechselnder Richtung (145,146) gedreht werden.

16. Verfahren nach einem der vorangehenden Ansprüche, **dadurch gekennzeichnet, daß** zum Ablegen (Z) der Teigstücke Ausstoß- und/oder Abstreifmittel (75) verwendet werden, die mit den Schneidkanten des Stanzwerkzeugs (21) in Wirkungsverbindung gesetzt werden, indem diese und die Ausstoß- und/oder Abstreifmittel (75) relativ zueinander verstellt werden.

17. Vorrichtung zur Vereinzelung von Teigstücken (147) aus einer kontinuierlichen Teigbahn (141) gemäß dem Verfahren nach einem der vorangehenden Ansprüche, mit einem die Teigstückkonturen aufweisenden und von Antriebsmitteln (15,19) betätigten und/oder bewegten Stanzwerkzeug (21), mit einem diesem gegenüberliegenden Tisch als Auf-, Unter- oder Ablage (33) für das Teigband (141) und die daraus mittels des Stanzwerkzeugs (21) geschnittenen Teigstücke (147) und mit auf die Antriebsmittel (15,19) einwirkenden Steuermitteln für die Koordination der zu bewegenden oder anzutreibenden Vorrichtungskomponenten, **gekennzeichnet durch** das Stanzwerkzeug (21) erfassende Führungsmittel (5,D,61), die derart mit den Antriebs- und/oder Steuermitteln gekoppelt sind und parallel zur Tischoberseite so verlaufen, daß das Stanzwerkzeug (21) mit den ausgeschnittenen Teigstücken (147) direkt auf und entlang der Tischoberseite gleiten kann und vom Teigbahnende (143) entfernbar (W-X) und dreh- oder verschwenkbar (145,146) ist.

18. Vorrichtung nach Anspruch 17 zur Durchführung des Verfahrens nach Anspruch 16, **dadurch gekennzeichnet, daß** das Stanzwerkzeug (21) mit Teig-Ausstoß- und/oder Halteelementen (75) versehen ist, die mit seinen Schneidelementen (53) zusammenwirken, und die Teig-Ausstoß- und/oder Halteelemente (75) und die Schneidelemente (53) gegeneinander mittels der Antriebsmittel (19) und/oder eines Federelements (69) (rück-)verstellbar angeordnet sind, um das jeweilige Teigstück (147) zwischen den Schneidelementen (53) auszustoßen und/oder davon abzustreifen.

19. Vorrichtung nach Anspruch 17 oder 18, **dadurch gekennzeichnet, daß** das Stanzwerkzeug (21) mit einer die Schneidelemente (53) tragenden Halte- oder Schneidplatte (55) gebildet ist, deren den Schneidelementen (53) zugeordnete Seite mit einer oder mehreren Aufnahmenuten (123) für die Schneidelemente (53) verschen ist, die entsprechend der Teigstückkontur verlaufen.

20. Vorrichtung nach einem der vorangehenden Ansprüche, **dadurch gekennzeichnet, daß** die Antriebsmittel (15,19) eine zum Teigband gerichtete Druck- oder Betätigungseinrichtung (19) und eine dieser entgegengerichtete und/oder entgegenwirkende Rückstelleinrichtung (69) aufweisen, mit denen jeweils die Schneidelemente (53) des Stanzwerkzeugs (21) verbunden sind, wobei der von der Rückstelleinrichtung (69) für die Schneidelemente (53) ausgelöste Rückweg (G) so bemessen ist, daß die Schneidelemente (53) außer formschlüssigen Eingriff mit der Tischoberseite kommen, das Stanzwerkzeug (21) mit den ausgeschnittenen Teigstücken (147) aber in reibschlüssigen Eingriff und/oder Gleitkontakt mit der Tischoberseite bleibt.

21. Vorrichtung nach einem der vorangehenden Ansprüche, **dadurch gekennzeichnet, daß** der Tisch (33) mit einem oder mehreren Förderbändern (129,131) gebildet ist, deren Förderweg von den Antriebs- und Steuermitteln abhängig von Position und/oder Zustand des Stanzwerkzeugs (21) kontrolliert oder geregelt ist.

22. Vorrichtung nach nach Anspruch 21, **gekennzeichnet durch** wenigstens zwei in Teigtransportrichtung (9) hintereinander angeordnete Förderbänder (129,131), von denen das erste (129) dem Stanz- oder Schneidvorgang (W,W1), und das zweite (131) dem Teigstück-Ablagevorgang (Z) zugeordnet ist.

23. Vorrichtung nach einem der vorangehenden Ansprüche, **dadurch gekennzeichnet, daß** die Führungsmittel (5,D,61) eine vom Teigbahnende (143) in oder parallel zur Transportrichtung (9) zum Teigstück-Ablageplatz (Z) verlaufende Linearführung (5), in der ein das Stanzwerkzeug (21) tragender und verbundener Schlitten (11) hin und her verschiebbar gelagert ist, und eine im oder am Schlitten (11) angeordnete Drehlagerung (D,103) aufweisen, an der das Stanzwekzeug (21) drehbar (145,146) angebracht ist, und die Antriebsmittel (15, 19) ein den Schlitten (11) bewegenden Linearantriebsmodul (15) und ein das Stanzwerkzeug (21) drehenden Drehantriebsmodul aufweisen, die zu ihrer Koordination und/oder Synchronisation mit den Steuermitteln verbunden sind.

24. Vorrichtung nach Anspruch 23, **dadurch gekennzeichnet, daß** das Drehantriebsmodul mit einer Drehscheibe (39) realisiert ist, die mit dem Stanzwerkzeug (21) drehgekoppelt oder -verbunden ist und Anschlag- und/oder Mitnehmerelemente (43a,43b) aufweist, denen ortsfeste Gegen-Anschlag- oder -Mitnehmerelemente (41a,41b) zum kraft- oder formschlüssigen Eingriff oder zur sonstige Kopplung zugeordnet sind.

25. Vorrichtung nach Anspruch 23, **dadurch gekennzeichnet, daß** das Drehantriebsmodul mit einem Rotationsmotor realisiert ist, der über die Steuerungsmittel mit dem Linearantriebsmodul (15) koordiniert und/oder synchronisiert ist.

26. Vorrichtung nach einem der vorangehenden Ansprüche, **dadurch gekennzeichnet, dass** das Stanzwerkzeug (21) eine erste, Schneidelemente (53) mit der Teigstückkontur aufweisende Halte- oder Schneidplatte (55) und eine zweite, Teig-Ausstoß- und/oder Halteelemente (75) aufweisende Halte- oder Basisplatte (57) besitzt, welche beiden Halteplatten (55,57) gegeneinander in Stanzhubrichtung (59) rückverstellbar verbunden sind, wobei die Teig-Ausstoß- und/oder Halteelemente (75) unmittelbar neben den Schneidelementen (53) und/oder an diesen gleitbar mit einem Verstellhub angeordnet sind, der sich beidseits der Schneidkante des Schneidelements (53) erstreckt.

27. Stanzwerkzeug nach Anspruch 26, **gekennzeichnet durch** eine oder mehrere, der Verbindung der beiden Platten (55,57) dienenden Säulen (61) und/oder Stangen (77), welche an ihrem einen Ende teilweise an der einen und teilweise an der anderen der beiden Platten (55,57) befestigt sind und die jeweils andere Platte (55,57) in Längs- und Stanzhubrichtung (59) verstellbar durchsetzen sowie an ihrem anderen Ende die Teig-Ausstoß- und/oder Halteelemente (75) oder Federelemente (69) aufweisen, wobei die Federelemente (69) gegen die nächstliegende Plattenseite abgestützt sind.

## Claims

1. Method of manufacturing individual dough pieces (147) from a continuous dough strip (141), in that in the end section of the dough strip (141) a row of separate, self-contained contours lying transverse to the strip longitudinal direction and corresponding to the dough pieces (147) are cut out, these contours or dough pieces (147) lying adjacent in sequence are removed from the strip end (143) and are rotated, pivoted or deposited otherwise positioned for further processing (145, 146), in which case in order to cut one or more punch tools (21) each with an upper part (55, 57) are used, which has one or more cutting sections (137) generating the contours in order to produce the dough-piece row (147), **characterised in that** the punch tool(s) (21), which have previously been used for cutting out the dough piece row (147) are used at the strip end (13), are removed from the strip end (143) by means of wholly or partially linear motion (9), in which case the previously cut dough strip row (147) is held between the cutting elements (53) of the punch tool upper part, is displaced and thus removed from the strip end (143) and is deposited in position, and after depositing (Z) the punch tool(s) (21) are moved back to the strip end (143) for the next cutting out (W, W1).

2. Method according to claim 1, **characterised in that** of the punch tools one part is held stationary or fixed and is used for cutting a part of the respective dough contour, whilst another or the other part of the punch tools used for moving the dough pieces is used to complete the respective dough piece contour.

3. Method according to claim 1 or 2, **characterised in that** the dough piece row is held and guided and/or displaced with the use of pick-up devices.

4. Method according to claim 1, 2 or 3, **characterised in that** during and/or after removal (W-X) from the strip end (143) a rotary and/or pivoting movement 9145, 146) is superimposed or inserted.

5. Method according to claims 3 or 3 and 4, **characterised in that** directly after punching (W, W1) of the dough piece contours (135), for further removal (W-X) or other positioning, guidance, holding, rotation (145, 146) and/or displacement of the dough pieces (147) the pressure on the punch tool upper part (55, 57) against the punch tool lower part (33) is reduced until the upper part (55, 57) can slide and/or be moved with its cutting edges over the surface of the punch tool lower part (33).

6. Method according to claims 3, 3 and 4 or 5, **characterised in that** as a punch tool lower part (33) a dough conveyor belt (129) is used, which is provided with a cut-resistant surface (135).

7. Method according to claim 6, **characterised in that** the dough conveyor belt (129) is stopped during the dough piece punching operation (W, W1) and is then set in motion again and/or moved in cycle.

8. Method according to claim 6 or 7, **characterised in that** after every punching operation (W, W1) the dough conveyor belt (129) is moved in the dough conveying direction (9) by a distance corresponding to the dimension of the contour or of the dough piece (147) in the strip longitudinal direction (1).

9. Method according to claim 8, wherein the contour or the dough piece (147) has the shape of an isosceles triangle, of which the base side (Bs) extends in or parallel to the dough strip longitudinal direction (1), and punching or cutting out of the dough pieces (147) from the dough strip (141) is effected without waste,
**characterised in that** the travel distance corresponds to half the length of the base side (Bs).

10. Method according to one of the preceding claims, **characterised in that** a plurality of punch tools (53, 137) each generating a dough piece contour are disposed adjacently in the dough strip end region (143) and are synchronised with one another or singly and/or are actuated and moved in a coordinated manner.

11. Method according to one of the preceding claims, wherein the adjacent contours or dough pieces (147) are removed (W-X) from the strip end (143) and are deposited rotated or pivoted (145, 146) for further processing, **characterised in that** by means of punch tool(s) (21) the dough piece row (147) is removed as a whole from the strip end (143) and is deposited after rotation, whereupon the punch means (21) is moved back into its cutting position (W, W1) at the strip end (143) and is again positioned, rotated (145, 146).

12. Method according to claim 10 and 11, **characterised in that** the punch tool assembly (21) with the cut-out dough piece structure (147) is aligned with the longitudinal direction (s) in the or parallel to the dough strip conveying direction (9).

13. Method according to claim 11 or 12, wherein the contour or dough piece (147) has the shape of an isosceles triangle, of which the base side (Bs) extends in the dough strip longitudinal direction (1), and the punching (W, W1) or cutting out of the dough pieces (147) from the dough strip (141) is free of left-over dough, **characterised by** a rotation (145, 146) of the punch tool(s) (21) such that the dough pieces (147) come to rest (Z) with their base side (Bs) extending respectively transverse to the dough conveying direction (9) and turned forward in the dough conveying direction (9).

14. Method according to one of the preceding claims, **characterised in that** after the cutting out (W, W1) of dough pieces and before depositing (Z) thereof, the punch tool (21) with the cut-out dough pieces (147) is first removed (W-X) linearly from the strip end and is then rotated (145, 146), and/or after the depositing (Z) of dough pieces and before cutting out (W, W1) of dough pieces the punch tool (21) is first rotated (145, 146) without the already deposited dough pieces (147) and is then moved (10) linearly to the strip end (143).

15. Method according to one of the preceding claims, wherein the cutting contour (137) of the punch tool (21) or the dough piece shape (147) is symmetrical with respect to a central axis (s) extending transverse to the strip longitudinal direction (1), **characterised in that** between every dough cutting operation (W, W1) the punch tool (21) is rotated optionally in assembly with one another through 180 degrees, preferably in alternate directions (145, 146).

16. Method according to one of the preceding claims, **characterised in that** in order to deposit (Z) the dough pieces ejector and/or scraper means (75) are used, which are set in active combination with the cutting edges of the punch tool (21), **in that** this and the ejector and/or scraper means (75) are staggered relative to one another.

17. Apparatus for separating dough pieces (147) from a continuous dough strip (141) according to the method according to one of the preceding claims, having a punch tool (21) having the dough piece contours and being actuated and/or moved by drive means (15, 19), a table opposite the same acting as a substrate or depositing surface (33) for the dough strip (141) and the dough pieces (147) cut therefrom by means of the punch tool (21), and having control means acting on the drive means (15, 19) for the coordination of the apparatus components to be moved or driven, **characterised by** guide means (5, D, 61) which detect the punch tool and which are so coupled to the drive and/or control means and extend parallel to the table surface that the punch tool (21) with the cut-out dough pieces (147) can slide directly on and along the table surface and is removable (W-X) from the dough strip end (143) and is rotatable or pivotable (145, 146).

18. Apparatus according to claim 17 for carrying out the method according to claim 16, **characterised in that** the punch tool (21) is provided with dough ejector and/or holding elements (75), which cooperate with its cutting elements (53), and the dough ejector and/or holding elements (75) and the cutting elements (53) are disposed so as to be displaceable (back) with respect to one another by means of the drive means (19) and/or of a spring element (69) in order to eject and/or scrape the respective dough piece (147) between the cutting elements (53).

19. Apparatus according to claim 17 or 18, **characterised in that** the punch tool (21) is formed with a holding or cutting plate (55) which carries the cutting elements (53) and whose side associated with the cutting elements (53) is provided with one or more receiving grooves (123) for the cutting elements (53), which extend along the dough piece contour.

20. Apparatus according to one of the preceding claims, **characterised in that** the drive means (15, 19) have a pressure or actuating device (19) oriented towards the dough strip and a resetting device (69) oriented in the opposite direction and/or counteracting the same, to which resetting device (69) the cutting elements (53) of the punch tool (21) are respectively connected, wherein the return distance (G) released by the resetting device (69) for the cutting elements (53) is so dimensioned that the cutting elements (53) come out of positively locking engagement with the table surface, the punch tool (21) with the cut-out dough pieces (147) remaining however in non-positive engagement and/or sliding contact with the table surface.

21. Apparatus according to one of the preceding claims, **characterised in that** the table (33) is formed with one or more conveyor belts (129, 131), whose conveying distance is controlled by the drive and control means depending on the position and/or state of the punch tool (21).

22. Apparatus according to claim 21, **characterised by** at least two conveyor belts (129, 131) disposed consecutively in the dough conveying direction (9), the first (129) of which is allocated to the punching or cutting operation (W, W1) and the second (131) to the dough piece depositing operation (Z).

23. Apparatus according to one of the preceding claims, **characterised in that** the guide means (5, D, 61) have a linear guide (5) extending from the dough strip end (143) in or parallel to the conveying direction (9) to the dough-piece depositing site (Z), in which linear guide a slide (11) connecting and carrying the punch tool (21) is mounted so as to slide reciprocatingly, and a rotary bearing (D, 103) which is disposed in or one the slide and on which the punch tool (21) is rotatably (145, 146) mounted, and the drive means (15, 19) have a linear drive unit (15) moving the slide (11) and a rotary drive unit rotating the punch tool (21), which are connected for their coordination and/or synchronisation to the control means.

24. Apparatus according to claim 23, **characterised in that** the rotary drive unit is realised with a rotary disc (39), which is rotarily coupled or connected to the punch tool (21) and has stop and/or driver elements (43a, 43b), to which fixed counter-stop or driver elements (41a, 41b) are allocated for non-positive or positive engagement or other coupling.

25. Apparatus according to claim 23, **characterised in that** the rotary drive unit is realised with a rotary motor, which is coordinated and/or synchronised via the control means with the linear drive unit (15).

26. Apparatus according to one of the preceding claims, **characterised in that** the punch tool (21) has a first holding or cutting plate (55), having cutting elements (53) with the dough piece contour, and a second holding or base plate (57) having dough ejecting and/or holding elements (75), both of which holding plates (55, 57) are connected against one another in the punching stroke direction (59) so as to be returnable, wherein the dough ejecting and/or holding elements (75) are disposed directly next to the cutting elements (53) and/or slidably thereon with an adjustment stroke, which extends on either side of the cutting edge of the cutting element (53).

27. Punch tool according to claim 26, **characterised by** one or more columns (61) for connecting the two plates (55, 57) and/or rods (77), which are fixed at their one end partly to one and partly to the other of the two plates (55, 57) and displaceably penetrate the respectively other plate (55, 57) in the longitudinal and punching-stroke direction (59), and at their other end comprise the dough ejecting and/or holding elements (75) or spring elements (69), wherein the spring elements (69) bear on the adjacent plate side.

## Revendications

1. Procédé destiné à produire des morceaux de pâte individuels (147) à partir d'une nappe de pâte continue (141), selon lequel on découpe dans le tronçon d'extrémité de la nappe de pâte (141), une rangée de contours séparés, qui s'étend de manière oblique ou transversale à la direction longitudinale de la nappe (9, 1), les contours étant chacun fermés en soi et correspondant aux morceaux de pâte (147), ces contours ou morceaux de pâte (147) disposés côte à côte en rangée étant ensuite éloignés de l'extrémité de la nappe, et déposés pour la poursuite du traitement, en étant tournés (145, 146), basculés ou positionnés d'une autre manière, la découpe étant effectuée au moyen d'un ou de plusieurs outils de découpage (21) comportant chacun une partie supérieure (55, 57), qui présente un ou plusieurs tronçons de coupe (137) engendrant les contours, pour produire la rangée de morceaux de pâte (147), **caractérisé en ce que** l'outil ou les outils de découpage (21) qui ont été utilisés auparavant à l'extrémité (143) de la nappe pour le découpage de la rangée de morceaux de pâte (147), sont retirés de l'extrémité (143) de la nappe et positionnés au moyen d'un mouvement totalement ou partiellement linéaire, la rangée de morceaux de pâte (147) découpée auparavant étant maintenue entre les éléments de coupe (53) de la partie supérieure de l'outil de découpage, déplacée en translation et, à cette occasion, retirée de l'extrémité (143) de la nappe et déposée de manière positionnée, et, après la dépose (Z), l'outil ou les outils de découpage (21) sont ramenés à l'extrémité (143) de la nappe pour un nouveau découpage (W, W1).

2. Procédé selon la revendication 1, **caractérisé en ce qu'**une partie des outils de découpage est maintenue stationnaire ou en position fixe et est utilisée pour découper une partie du contour du morceau de pâte considéré, tandis qu'une autre ou l'autre partie des outils de découpage mise en oeuvre pour le déplacement des morceaux de pâte, est utilisée pour compléter le contour du morceau de pâte considéré.

3. Procédé selon la revendication 1 ou 2, **caractérisé en ce que** la rangée de morceaux de pâte est maintenue et guidée et/ou déplacée en translation en utilisant des dispositifs de préhension ou des dispositifs de prélèvement (Pick-up).

4. Procédé selon la revendication 1, 2 ou 3, **caractérisé en ce que** durant et/ou après le retrait (W-X) de l'extrémité (143) de la nappe, on superpose ou on insère un mouvement de rotation et/ou de pivotement.

5. Procédé selon les revendications 3 ou 3 et 4, **caractérisé en ce que** directement après le découpage (W, W1) des contours de morceaux de pâte (135), pour la poursuite du retrait (W-X) ou autre positionnement, guidage, maintien, rotation (145, 146) et/ou déplacement en translation des morceaux de pâte (147), la pression de la partie supérieure (55, 57) de l'outil de découpage contre la partie inférieure (33) de l'outil de découpage est rabaissée de façon telle que la partie supérieure (55, 57), avec ses arêtes de coupe, glisse et/ou peut être déplacée par-dessus la surface de la partie inférieure (33) de l'outil de découpage.

6. Procédé selon les revendications 3, 3 et 4 ou 5, **caractérisé en ce qu'**en guise de partie inférieure d'outil de découpage (33), on utilise une bande de transport de pâte (129), dotée d'une surface résistant à la coupe.

7. Procédé selon la revendication 6, **caractérisé en ce que** la bande de transport de pâte (129) est stoppée pendant l'opération de découpage (W, W1) des morceaux de pâte, et est à nouveau remise en mouvement et/ou déplacée de manière cadencée.

8. Procédé selon les revendications 6 ou 7, **caractérisé en ce qu'**après chaque opération de découpage (W, W1), la bande de transport de pâte (129) est déplacée dans la direction de transport (9) de la pâte, d'une distance qui correspond à la dimension du contour ou du morceau de pâte (147) dans la direction longitudinale (1) de la nappe.

9. Procédé selon la revendication 8, le contour ou le morceau de pâte (147) présentant la forme d'un triangle isocèle dont la base (Bs) s'étend dans la direction longitudinale (1) de la nappe de pâte ou parallèlement à celle-ci, et le découpage des morceaux de pâte (147) de la nappe de pâte (141) s'effectuant sans résidus de pâte, **caractérisé en ce que** la distance de déplacement correspond à la moitié de la longueur de la base (Bs).

10. Procédé selon l'une des revendications précédentes, **caractérisé en ce que** plusieurs outils de découpage (53, 137) engendrant chacun un contour de morceau de pâte sont disposés côte à côte dans la zone d'extrémité (143) de la nappe de pâte, et sont actionnés et déplacés de manière combinée en commun ou individuellement, de façon mutuellement synchronisée et/ou coordonnée.

11. Procédé selon l'une des revendications précédentes, les contours ou les morceaux de pâte (147) disposés côte à côte en rangées, étant retirés (W-X) de l'extrémité (143) de la nappe et déposés en ayant été tournés ou en ayant subi un pivotement (145, 146), dans l'optique de la poursuite de leur traitement, **caractérisé en ce qu'**au moyen de l'outil de découpage ou des outils de découpage (21), la rangée de morceaux de pâte (147) est retirée en tant qu'ensemble de l'extrémité (143) de la nappe et est déposée après rotation, le ou les moyens de découpage (21) étant ensuite à nouveau ramenés dans leur position de découpage (W, W1) et à nouveau positionnés en étant tournés (145, 146) à cette occasion.

12. Procédé selon les revendications 10 et 11, **caractérisé en ce que** le complexe d'outils de découpage (21) avec l'ensemble découpé des morceaux de pâte (147), est orienté avec la direction longitudinale (s) dans ou parallèlement à la direction de transport (9) de la nappe de pâte.

13. Procédé selon les revendications 11 ou 12, le contour ou le morceau de pâte (147) présentant la forme d'un triangle isocèle dont la base (Bs) s'étend dans la direction longitudinale (1) de la nappe de pâte, et le découpage (W, W1) des morceaux de pâte (147) de la nappe de pâte (141) s'effectuant sans résidus de pâte, **caractérisé par** une rotation (145, 146) de l'outil de découpage ou des outils de découpage (21) de façon telle, que les morceaux de pâte (147) soient déposés (Z) avec leur bases respectives (Bs) s'étendant transversalement à la direction de transport (9) de la pâte, et dirigées vers l'avant dans le sens de la direction de transport (9) de la pâte.

14. Procédé selon l'une des revendications précédentes, **caractérisé en ce qu'**après le découpage (W, W1) des morceaux de pâte et avant la dépose (Z) des morceaux de pâte, l'outil de découpage (21), avec les morceaux de pâte découpés (147), est tout d'abord retiré ou éloigné linéairement (W-X) de l'extrémité de la nappe et est ensuite tourné (145, 146), et/ou après la dépose (Z) des morceaux de pâte et avant le découpage (W, W1) des morceaux de pâte, l'outil de découpage (21), sans les morceaux de pâte (147) déjà déposés, est tout d'abord tourné (145, 146) et est ensuite déplacé linéairement (10) vers l'extrémité (143) de la nappe.

15. Procédé selon l'une des revendications précédentes, le contour de coupe (137) de l'outil de découpage (21) ou la forme des morceaux de pâte (147) étant symétrique par rapport à un axe central (s) qui s'étend transversalement à la direction longitudinale (1) de la nappe, **caractérisé en ce qu'**entre chaque opération de découpage de pâte (W, W1), l'outil de découpage (21), le cas échéant les outils du complexe d'outils de découpage sont tournés de 180°, de préférence de manière alternée dans l'un ou l'autre sens (145, 146).

16. Procédé selon l'une des revendications précédentes, **caractérisé en ce que** pour la dépose (Z) des morceaux de pâte, on utilise des moyens d'éjection et/ou de raclage (75), que l'on fait interagir avec les arêtes de coupe de l'outil de découpage (21) en déplaçant celles-ci relativement par rapport aux moyens d'éjection et/ou de raclage (75).

17. Dispositif de séparation de morceaux de pâte individuels (147) d'une nappe de pâte continue (141) conformément au procédé selon l'une des revendications précédentes, comprenant un outil de découpage (21) présentant les contours du morceau de pâte et actionné et/ou déplacé par des moyens d'entraînement (15, 19), comprenant également en regard de l'outil, une table en tant que base, support d'appui ou surface de dépôt (33) pour la nappe de pâte (141) et les morceaux de pâte (147) y ayant été découpés au moyen de l'outil de découpage (21), et comprenant également des moyens de commande agissant sur les moyens d'entraînement (15, 19) pour la coordination des composants du dispositif à déplacer ou à entraîner, **caractérisé par** des moyens de guidage (5, D, 61) qui supportent l'outil de découpage (21) et qui sont couplés avec les moyens d'entraînement et/ou de commande et s'entendent parallèlement au côté supérieur de la table de manière telle, que l'outil de découpage (21) puisse, avec les morceaux de pâte (147) découpés, glisser directement sur le côté supérieur de la table et le long de celui-ci, et puisse être retiré ou éloigné (W-X) de l'extrémité (143) de la nappe de pâte et être tourné ou subir un pivotement (145, 146).

18. Dispositif selon la revendication 17 pour la mise en oeuvre du procédé selon la revendication 16, **caractérisé en ce que** l'outil de découpage (21) est doté d'éléments d'éjection et/ou de support (raclage) de la pâte (75), qui interagissent avec ses éléments de coupe (53), et les éléments d'éjection et/ou de support (raclage) de la pâte (75) et les éléments de coupe (53) sont montés de manière à pouvoir être déplacés (rappelés de manière élastique) réciproquement par les moyens d'entraînement (19) et/ou un élément de ressort (69), en vue d'éjecter le morceau de pâte (147) considéré d'entre les éléments de coupe (53) et/ou de l'en séparer par raclage.

19. Dispositif selon la revendication 17 ou 18, **caractérisé en ce que** l'outil de découpage (21) est réalisé avec une plaque de support ou plaque de coupe (55) portant les éléments de coupe (53), dont le côté dirigé vers les éléments de coupe (53) est pourvu d'une ou de plusieurs rainures de réception (123) pour les éléments de coupe (53), qui s'étendent conformément au contour des morceaux de pâte.

20. Dispositif selon l'une des revendications précédentes, **caractérisé en ce que** les moyens d'entraînement (15, 19) comportent un dispositif de pression ou d'actionnement (19) dirigé vers la nappe de pâte et, opposé et/ou agissant à l'encontre de celui-ci, un dispositif de rappel (69), avec lesquels sont reliés respectivement les éléments de coupe (53) de l'outil de découpage (21), le déplacement de rappel (G) engendré par le dispositif de rappel (69) pour les éléments de coupe (53) étant dimensionné de manière telle, que les éléments de coupe (53) quittent leur prise par complémentarité de forme avec le côté supérieur de la table, mais de façon telle que l'outil de découpage (21) avec les morceaux de pâte découpés (147) reste toutefois en prise par adhérence et/ou en contact de glissement avec le côté supérieur de la table.

21. Dispositif selon l'une des revendications précédentes, **caractérisé en ce que** la table (33) est formée par une ou plusieurs bandes de transport (129, 131) dont le déplacement de transport est commandé ou régulé par les moyens d'entraînement et de commande, en fonction de la position et/ou de l'état de l'outil de découpage (21).

22. Dispositif selon la revendication 21, **caractérisé par** au moins deux bandes de transport (129, 131) disposées l'une à la suite de l'autre dans la direction de transport de la pâte (9), dont la première (129) est affectée à l'opération de découpage ou de coupe (W, W1); et la seconde (131) à l'opération de dépose (Z) du morceau de pâte.

23. Dispositif selon l'une des revendications précédentes, **caractérisé en ce que** les moyens de guidage (5, D, 61) comprennent un guidage linéaire (5) qui s'étend dans ou parallèlement à la direction de transport (9), de l'extrémité (143) de la nappe de pâte jusqu'au lieu du dépôt (Z) des morceaux de pâte, et dans lequel est monté de manière à pouvoir y coulisser en va-et-vient, un chariot (11) portant l'outil de découpage (21) lié au chariot, les moyens de guidage comprenant également un palier de rotation (D, 103) disposé dans ou sur le chariot (11) et dans lequel est monté en rotation (145, 146) l'outil de découpage (21), et **en ce que** les moyens d'entraînement (15, 19) comportent un module d'entraînement linéaire (15) déplaçant le chariot (11), et un module d'entraînement en rotation faisant tourner l'outil de découpage (21), ces modules étant reliés aux moyens de commande, en vue de leur coordination et/ou synchronisation.

24. Dispositif selon la revendication 23, **caractérisé en ce que** le module d'entraînement en rotation est réalisé à l'aide d'un disque de rotation (39), qui est couplé ou relié en rotation à l'outil de découpage (21), et qui présente des éléments de butée et/ou d'entraînement (43a, 43b) auxquels sont associés des éléments de butée et/ou d'entraînement conjugués (41a, 41b) en position fixe, pour la prise par adhérence ou par complémentarité de forme, ou pour un autre couplage.

25. Dispositif selon la revendication 23, **caractérisé en ce que** le module d'entraînement en rotation est réalisé à l'aide d'un moteur de rotation, qui est coordonné et/ou synchronisé avec le module d'entraînement linéaire (15), par l'intermédiaire des moyens de commande.

26. Dispositif selon l'une des revendications précédentes, **caractérisé en ce que** l'outil de découpage (21) possède une première plaque de support ou de coupe (55) présentant des éléments de coupe (53) avec le contour des morceaux de pâte, et une seconde plaque de support ou de base (57) présentant des éléments d'éjection et/ou de support (raclage) de la pâte (75), ces deux plaques de support (55, 57) étant reliées de manière à pouvoir être déplacées réciproquement dans la direction de la course de découpage (59), les éléments d'éjection et/ou de support (raclage) de la pâte (75) étant disposés directement à côté des éléments de coupe (53) et/ou de manière à pouvoir glisser sur ceux-ci avec une course de déplacement qui s'étend de part et d'autre de l'arête de coupe de l'élément de coupe (53).

27. Outil de découpage selon la revendication 26, **caractérisé par** plusieurs montants (61) et/ou tiges (77) servant à assurer la liaison des deux plaques (55, 57), qui, à l'une de leurs extrémités sont fixés en partie à l'une et en partie à l'autre des deux plaques (55, 57), et qui traversent respectivement l'autre plaque (55, 57) en étant mobiles dans la direction longitudinale et la direction de la course de découpage (59), les montants et/ou tiges présentant à leur autre extrémité, les éléments d'éjection et/ou de support (raclage) de la pâte (75) ou des éléments de ressort (69) qui prennent appui sur le côté de plaque le plus proche.
